## Europäisches Patentamt
## European Patent Office
## Office européen des brevets

(19)

(11) Veröffentlichungsnummer : **0 245 320 B1**

(12)

# EUROPÄISCHE PATENTSCHRIFT

(45) Veröffentlichungstag der Patentschrift :
**15.05.91 Patentblatt 91/20**

(51) Int. Cl.$^5$ : **D06M 10/00**

(21) Anmeldenummer : **86906288.5**

(22) Anmeldetag : **06.11.86**

(86) Internationale Anmeldenummer :
**PCT/DE86/00450**

(87) Internationale Veröffentlichungsnummer :
**WO 87/03021 21.05.87 Gazette 87/11**

(54) FASER, FILAMENT, GARN UND/ODER DIESE BZW. DIESES AUFWEISENDE FLÄCHENGEBILDE UND/ODER HAUFWERK SOWIE VERFAHREN ZUR HERSTELLUNG DERSELBEN BZW. DESSELBEN.

(30) Priorität : 14.11.85 DE 3540411
10.09.86 DE 3630769
25.10.86 DE 3636395

(43) Veröffentlichungstag der Anmeldung :
**19.11.87 Patentblatt 87/47**

(45) Bekanntmachung des Hinweises auf die
Patenterteilung :
**15.05.91 Patentblatt 91/20**

(84) Benannte Vertragsstaaten :
**AT BE CH DE FR GB IT LI LU NL SE**

(56) Entgegenhaltungen :
EP-A- 0 117 561
EP-A- 0 173 925
GB-A- 2 053 789

(56) Entgegenhaltungen :
**Japanese Patent Gazette, part I, Chemical, week X03, 25 February 1976, Derwent Publications, Rochdale House (London, GB), see section F, page 3 & JP-A-069310**
**Textile Research Journal, vol. 44, No. 2, February 1974 (Princetown, New Jersey, US), S.B. Nordin et al: "An indication of molten cellulose produced in a laser beam", pages 152-154**

(73) Patentinhaber : **DEUTSCHES TEXTILFORSCHUNGSZENTRUM NORD-WEST E.V.**
**Frankenring 2**
**W-4150 Krefeld (DE)**

(72) Erfinder : **BOSSMANN, Adelgund**
**Gahlingspfad 64a**
**W-4150 Krefeld 1 (DE)**
Erfinder : **SCHOLLMEYER, Eckhard**
**Von-Baeyer-Str. 22**
**W-4152 Kempen 1 (DE)**

(74) Vertreter : **Döring, Wolfgang, Dr. Ing.**
**Mörikestrasse 18**
**W-4000 Düsseldorf 30 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Faser, ein Filament, Garn und/oder diese bzw. dieses aufweisende Flächengebilde und/oder Haufwerk mit den Merkmalen des Obergegriffs des Patentansprüchs 1, ein Verfahren zur Herstellung derselben bzw. desselben mit den Merkmalen des Oberbegriffs der Patentanspruchs 7 und eine Vorrichtung zur Herstellung derselben bzw. derselben mit den Merkmale des Oberbegriffs des Patentanspruchs 32.

In der Oberfläche unterschiedlich strukturierte Fasern, Filamente, Garne, Flächengebilde und/oder Haufwerke sind bekannt. Dies kann beispielsweise bei Fasern, Filamenten bzw. daraus hergestellten Garnen aus synthetischen Polymeren dadurch erreicht werden, daß beim Primärspinnen unterschiedlich ausgebildete Spinndüsen verwendet werden und somit die so gesponnenen Fasern bzw. Filamente eine entsprechende Profilierung aufweisen, die sich z.B. in einem entsprechenden runden, ovalen, dreieckigen, sternförmigen oder vieleckigen Querschnitt ausdrückt. Auch können Naturfasern, wie beispielsweise Baumwoll- oder Wollgarne, durch Merzerisation bzw. Chlorieren verändert werden. Hierbei wird das entsprechende Garn in einer wäßrigen, alkali- bzw. chlorhaltigen Flotte behandelt, wodurch im Falle der Baumwollgarne eine Veränderung der Querschnittsform und im Falle der Wollgarne eine Veränderung der Schuppenstruktur hervorgerufen wird, was jedoch nur innerhalb eines kleinen Bereiches ohne Garnschädigung, die sich beispielsweise in einer unterschiedlichen Anfärbbarkeit bzw. Bedruckbarkeit oder in Flüssigkeitsverlusten ausdrückt, möglich ist. Darüberhinaus werden durch derartige Verfahren die Oberflächen nicht strukturiert, sondern geglättet.

Bei Flächengebilden ist zwischen den mechanischen und chemischen Verfahren zur Veränderung der Oberfläche zu unterscheiden. So basieren die mechanischen Verfahren darauf, daß die Oberfläche der Flächengebilde mittels eines in einem Kalander angeordneten strukturierten Walzenpaares entsprechend dessen Strukturierung geprägt wird. Hierbei ist der Grad der Prägung von der jeweiligen Ware, der Prägetemperatur und dem -druck abhängig. Derartige, durch mechanische Verformungen herbeigeführte Oberflächenveränderungen weisen den Nachteil auf, daß sie vielfach nicht permanent und somit bereits nach einem kurzzeitigen Gebrauch bzw. einer wiederholten Pflegebehandlung des Flächengebildes nicht mehr vorhanden sind. Darüberhinaus besteht während des Prägevorgangs immer die Gefahr, daß sich Verschmutzungen bzw. Garnreste auf dem Walzenpaar ablagern, was zu einem fehlerhaften, nicht zu verbessernden Warenausfall führt. Auch sind beim Prägen bedingt durch die hierbei verwendeten Walzenpaare bezüglich der Abmessungen der Strukturierung Grenzen gesetzt, so daß diese üblicherweise sowohl eine Länge als auch eine Breite und Tiefe von mehreren mm aufweist und somit bezogen auf die Faser- bzw. Filamentdimensionen relativ grob ausgebildet ist.

Bei den chemischen Verfahren zur Oberflächenveränderung sind insbesondere die Hydrolyseverfahren für Flächengebilde aus Triacetat- und Polyesterfasern zu nennen. Hierbei wird das Flächengebilde üblicherweise in einer alkalihaltigen Flotte bei einer bestimmten Temperatur für eine gewisse Zeit behandelt, wodurch abhängig von der Alkalikonzentration, Behandlungstemperatur und -zeit bedingt durch Verseifung der Faser eine Titerverringerung herbeigeführt wird, ohne daß hierbei eine Strukturierung der Oberfläche der in dem Flächengebilde verarbeiteten Fasern, Filamente bzw. Garne stattfindet. Vielmehr wird durch den Abbau der Faser bzw. des Filamentes oder Garnes deren bzw. dessen Oberfläche geglättet.

Die DE-A-32 03 973 beschreibt ein Verfahren zur Herstellung von fibrillierten Fasern. Hierbei wird ein polymeres Granulat auf ein bestimmtes Schüttgewicht derart verdichtet, daß es Gaseinschlüsse aufweist. Anschließend wird das Granulat mittels Laserstrahlen bis zu einer bestimmten Tiefe aufgeschmolzen, wobei ein Zwischenprodukt gebildet wird. Hierbei entweichen die in diesem Zwischenprodukt eingeschlossenen Gase. Dadurch werden über den Querschnitt des Zwischenproduktes verteilte Bläschen und auf der Oberfläche desselben angeordnete Krater gebildet. Durch ein anschließendes Verstrecken des Zwischenproduktes wird erst die eigentliche Faser hergestellt, wobei durch das Verstrecken die an der Oberfläche befindlichen Krater unter Ausbildung der Fibrillen aufreißen. Eine derartig hergestellte Faser besitzt somit auf ihrer Oberfläche lediglich abstehende Fibrillen, die jedoch Längen über 100 μm aufweisen.

Ein mit der DE-A-32 03 973 vergleichbares Verfahren ist der EP-A-0 117 561 zu entnehmen. Hierbei werden bei diesem Verfahren Fasern vor oder während einer Plasmabehandlung mit sehr feindispersen Partikeln, beispielsweise Titanoxid, behandelt, wobei diese Partikel bei der Plasmabehandlung entweder agglomerieren oder als einzelne Partikel mit der Faseroberfläche verbunden werden. Somit wird bei diesem Verfahren eine Strukturierung durch ein faserfremdes Material erzielt, wobei die EP-A-0 117 561 ausdrücklich darauf hinweist, daß bei der bekannten Mikrostrukturierung die Abstände zwischen entsprechenden Erhebungen nicht größer als 0,7 μm sein sollen.

Ein Verfahren mit den Merkmalen des Oberbegriffs des Patentanspruchs 1 ist aus der EP-A-0 173 925 zu entnehmen. Hierbei beschreibt diese Veröffentlichung ein Verfahren zur Herstellung von Kunsthaaren, wobei die so behandelten Haare eine aufgerauhte Oberfläche besitzen sollen. Um eine derartige Oberfläche zu erzeugen, schlägt die EP-A-0 173 925 unter anderem auch vor, das einzelne, monofile Kunsthaar mit einem Laser zu bestrahlen. Hierdurch soll erreicht werden, daß das Kunsthaar auf seiner Oberfläche eine mit dem Menschenhaar vergleichbare schuppenartige Struktur aufweist.

Der vorliegenden Erfindung liegt die Aufgabe zugrunde, eine Faser, ein Filament, Garn und/oder diese bzw. dieses aufweisendes Flächengebilde und/oder Haufwerk zur Verfügung zu stellen, die bzw. das eine besonders große spezifische Oberfläche und somit ein besonders gutes Haftungsvermögen besitzt.

Diese Aufgabe wird erfindungsgemäß durch eine Faser, ein Filament, Garn und/oder diese bzw. dieses aufweisendes Flächengebilde und/oder Haufwerk mit den kennzeichnenden Merkmalen des Patentanspruchs 1 gelöst.

Die erfindungsgemäße Faser bzw. das erfindungsgemäße Filament, Garn, und/oder diese bzw. dieses aufweisendes Flächengebilde und/oder Haufwerk weist auf ihrer bzw. seiner Oberfläche eine unter Verwendung eines Laser hergestellte Mikrostrukturierung auf, die überwiegand in der Form von sich quer der Längsachse der Faser bzw. des Filamentes erstreckenden, Livienförmigen Vertiefungen und/oder Erhebungen ausgebildet ist. Hierbei erstrecken sich diese Vertiefungen bzw. Erhebungen, die eine Tiefe bzw. Höhe bis zu etwa 10 µm, eine Brite bis etwa 1 µm und einen Abstand zwischen etwa 1 µm und etwa 10 µm aufweisen, über etwa 10% bis etwa 100% der Oberfläche der Faser und/oder des Filaments. Bedingt durch die Mikrostrukturierung weist die erfindungsgemäße Faser bzw. das Filament, Garn, Flächengebilde und/oder Haufwerk im Vergleich zu herkömmlich ausgebildeten Fasern, Filamenten, Garnen, Flächengebilden oder Haufwerken eine erheblich vergrößerte spezifische Oberfläche auf, was insbesondere dann zutrifft, wenn sich die Vertiefungen bzw. Erhebungen über die gesamte Oberfläche der in dem Garn, Flächengebilde oder Laufwerk eingearbeiteten Fasern bzw. Filamenten erstreckt. Eine derartige Vergrößerung der spezifischen Oberfläche beinhaltet eine Reihe von Vorteilen.

So wird zunächst hierdurch das Haftungsvermögen, beispielsweise gegenüber Beschichtungen, Kaschierungen, über Bindesysteme gebundenen Pigmenten oder dgl., verbessert, da diese aufgrund der höheren Rauhigkeit der Oberfläche nicht nur wesentlich stärker ad- bzw. absorbiert, sondern auch gleichzeitig wesentlich fester und gegenüber mechanischen Beanspruchungen haltbarer in der Oberfläche eingelagert und dort gebunden werden. Auch wird durch die Mikrostruktur und die damit verbundene Rauhigkeit der Reibungswiderstand zwischen den in einem Garn, Flächengebilde oder Haufwerk eingearbeiteten Fasern bzw. Filamenten erhöht, so daß diese wesentlich schwieriger relativ zueinander bewegbar sind. Dies führt beispielsweise bei Garnen zu einer Erhöhung der Festigkeit und bei Flächengebilden bzw. Haufwerken zu einer Verbesserung der Schiebe- und ggf. der Nahtfestigkeit. Ebenso ist das Wasseraufnahmevermögen der mikrostrukturierten Oberflächen der Fasern, Filamente, Garne, Flächengebilde und/oder Haufwerke vergrößert, was sich insbesondere bei Synthesefasern in verbessertten physiologischen und/oder permanent antistatischen Eigenschaften ausdrückt. Wegen der Vergrößerung der spezifischen Oberfläche weisen die erfindungsgemäßen Fasern, Filamente, Garne, Flächengebilde bzw. Haufwerke ausgezeichnete Filtrationseigenschaften auf, so daß sie beispielsweise zur Herstellung von Filtern, die zur Filtration von Getränken oder zur Abscheidung von Feinststäuben aus Reinraumklimata, besonders geeignet anwendbar sind. Auch im medizinischen Bereich bieten die erfindungsgemäßen Fasern, Filamente, Garne, Flächengebilde und/oder Haufwerke eine Reihe von Vorteilen. So können beispielsweise hieraus chirurgisches Nähmaterial oder prothetische Artikel, wie beispielsweise künstliche Adern, hergestellt werden, die im Vergleich zu üblichen Fasern, Filamenten, Garnen, Flächengebilden oder Haufwerken ein wesentlich höheres Resorptionsvermögen besitzen. Ebenso weisen mit einer Mikrostrukturierung versehene Hohlfasern, die in künstlichen Nieren verwendet werden, im Vergleich zu konventionellen Hohlfasern erheblich verbesserte Austauschkoeffizienten auf.

Im Bereich der faserverstärkten Werkstoffe, wie beispielsweise faserverstärkte Kunststoffe, Reifen, oder faserverstärkter Beton, besitzendie mit einer Mikrostrukturierung versehenen Oberflächen der Fasern, Filamente, Garne, Flächengebilde und/oder Haufwerke wegen der höheren Oberflächenrauhigkeit ein verbessertes Haftungsvermögen zu der sie umgebenden Matrix, wie beispielsweise Gummi, Kunststoff oder Beton, was sich z.B. in einer verlängerten Standzeit und einer erhöhten Festigkeit ausdrückt.

Ergänzend zum vorstehend aufgeführten Stand der Technik wird noch auf eine Veröffentlichung in Textile Research Journal, Bd. 44, Nr. 2, S. 152-154 verwiesen. Hierbei ist diese Publikation auf eine Papieroberfläche gerichtet, die kreisförmig ausgebildete Löcher, Blasen und Krater aufweist, die durch eine Laserbestrahlung der Papieroberfläche hergestellt sind.

Abhängig von dem jeweiligen Einsatzgebiet und der damit verbundenen erforderlichen bzw. gewünschten Oberflächenvergrößerung können sich auch die Vertiefungen und/oder Erhebungen der Mikrostrukturierung nur über einen Teilbereich, beispielsweise zwischen etwa 20% und etwa 80%, der Oberfläche der Faser bzw. des Filaments erstrecken. Allgemein gilt hierfür, daß mit zunehmender Einarbeitung der Faser bzw. des Filamentes im Garn, Flächengebilde bzw. Haufwerk die Größe des mikrostrukturierten Bereiches abnimmt. So erstrecken sich die Vertiefungen und/oder Erhebungen der Mikrostrukturierung bei relativ locker eingestellten Garnen, Flächengebilden oder Haufwerken vorzugsweise über etwa 60 bis 80% und bei relativ dicht eingestellten Garnen, Flächengebilden bzw. Haufwerken vorzugsweise über etwa 40 bis 60% der Oberfläche der in dem Garn, Flächengebilde oder Haufwerk eingearbeiteten Fasern bzw. Filamente.

Bei einer bevorzugten Ausführungsform der erfindungsgemäßen Faser, des Filaments, Garns, und/oder diese bzw. dieses aufweisendes Flächengebilde oder Haufwerk weisen die lienienförmigen Vertiefungen und-/oder Erhebungen Tiefen bzw. Höhen zwischen etwa 0,1 µm und etwa 4 µm, vorzugsweise zwischen etwa 0,5 µm und etwa 1 µm auf. Die Breiten varienn hierbei vorzugsweise zwischen etwa 0,3 µm und 0,6 µm. Ihr Abstand voneinander liegt dabei vorzugsweise zwischen etwa 1 µm und etwa 3 µm.

Zusätzlich kann die erfindungsgemäße Faser, das Filament, Garn, Flächengebilde oder Haufwerk im Bereich der Oberfläche der Faser bzw. des Filaments reaktionsfähige Gruppen, wie beispielsweise basische oder saure Gruppen, umfassen. Vorzugsweise handelt es sich bei dem Bereich um den Abschnitt der Faser-bzw. Filamentoberfläche, der die vorstehend beschriebene Mikrostrukturierung aufweist.

Die Erfindung betrifft ferner ein Herstellungs verfahren für die zuvor beschriebenen unikerbstüktierenden Sübstrat.

Das erfindungsgemäße Verfahren zur Herstellung der vorstehend beschriebenen Faser, des Filaments, Garns, und/oder diese bzw. dieses aufweisendes Flächengebildes und/oder Haufwerks beruht auf dem Grundgedanken, nicht, wie beim enigangs genannten Stand der Technik, die Oberfläche dieser Substrate durch eine mechanische Verformung, sondern stattdessen durch ein überungend, linienförmiges An- bzw. Aufschmelzen und/oder Abtragen zu verändern, wobei die hierfür notwendige Energie von einem gepulsten Gaslaser erzeugt wird. Durch Abstimmung der Wellenlänge und Energie der gepulsten Laserstrahles bzw. der gepulsten Laserswahlen und der Größe bzw. Form der hiervon bestrahlten Fläche auf das jeweils zu behandelnde Substrat ist es möglich, der zuvor beschriebenen unterschiedlichen ausgebildeten Mikrostrukturierung zu versehen.

Ein derartiges Verfahren weist im Vergleich zu dem eingangs aufgeführten Stand der Technik, bei dem die Oberfläche mechanisch behandelt wird eine Reihe von Vorteilen auf. So ist es beispielsweise möglich, das erfindungsgemäße Verfahren in besonders einfacher Weise sowohl bei Fasern, Filamenten oder Garnen einerseits als auch bei Flächengebilden oder auch Haufwerken andererseits anzuwenden, da die vorstehend beschriebene Oberflächenstrukturierung berühnngs los Abläuft. Von daher kann die für ein solches Verfahren verwendete Vorrichtung auf spezielle, auf die geometrische Form des jeweils zu behandelnden Substrates abgestimmte Einrichtungen, wie beispielsweise entsprechend ausgebildete Walzenpaare bei dem bekannten Kalander, verzichten. Darüberhinaus sind die durch das erfindungsgemäße Verfahren hergestellten Oberflächen, wie vorstehend dargelegt, sehr feinstrukturiert, wobei diese Strukturierung beim späteren Gebrauch und insbesondere auch gegenüber extremen Pflegebehandlungen permanent ist, da sie nicht, wie beim vorstehend aufgeführten Stand der Technik, auf einer mechanischen Verformung der Oberfläche, sondern auf einem linienförmigen An- bzw. Aufschmelzen bzw. Abtragen derselben beruht. Auch ist im Vergleich zu den bekannten Verfahren das erfindungsgemäße Verfahren wesentlich umweltfreundlicher, da hierbei für die Oberflächenstrukturierung keine Chemikalien, wie beispielsweise Chlor oder Laugen, erforderlich sind. Darüberhinaus sind keine auf entsprechende Temperaturen erhitzte Behandlungs- bzw. Spülbäder notwendig, was somit zur Energie- und Wassereinsparung führt. Auch gelangen bei dem erfindungsgemäßen Verfahren die bei der Mikrostrukturierung anfallenden Abbauprodukte der Fasern bzw. Filamente nicht ins Abwaseer, da diese bedingt durch die von dem Laser zugeführte Energie abdampfen und aus der Abluft mit einem relativ geringen Aufwand, beispielsweise durch entsprechend ausgebildete Filter oder Kondensatoren, abgeschieden werden können.

Bei dem erfindungsgemäßen Verfahren richtet sich die Auswahl des gepulsten Gaslasers nach dem zu behandelnedn Fasersubstrat und der jeweiligen Energie, Wellenlänge und Leistung der von dem Laser erzeugten Strahlen. Grundsätzlich können alle gepulsten Gaslaser verwendet werden, die in der Lage sind, Strahlen mit einer entsprechenden Energie, Wellenlänge bzw. Leistung zu erzeugen, die groß genug ist, um das vorstehend beschriebene Mikrostrukturierung der Oberfläch zu bewerkstelligen. So sind beispielsweise Edelgas-Ionenlaser, wie z.B. Ar- oder Kr-Ionenlaser, die in einem Wellenlängenbereich zwischen etwa 400 nm und etwa 800 nm arbeiten und die auf einzelne Wellenlängen durchstimmbar sind, geeignet. Ebenso kann die Bestrahlung mit Neodym-YAG-Laser (Ne-YAG) bei einer Wellenlänge von 1 µm durchgeführt werden. Weiterhin können CO-Laser bei einer Wellenlänge von 5,2 µm oder $CO_2$-Laser bei einer Wellenlänge zwischen 9,6 bis 10,6 µm eingesetzt werden. Auch andere Gaslaser, die allgemein in einem Wellenlängenbereich zwischen etwa 5 nm und etwa 1200 nm, vorzugsweise in einem Wellenlängenbereich zwischen 157 nm und 351 nm, arbeiten, sind einsetzbar, wobei durch Frequenzverfielfachungen Wellenlängenverkürzungen bewirkt werden können.

Besonders geeignet erweisen sich zur Erzeugung der Laserstrahlen auch Excimer-Laser, die beispielsweise als Lasermedium $F_2$, ArF, KrCL, KrF, XeCl, $N_2$ und XeF verwenden und die Strahlen bei einer Wellenlänge von 157 nm, 193 nm, 222 nm, 248 nm, 308 nm, 337 nm, und 351 nm, erzeugen. Die jeweils zu behandelnde Oberfläche kann auf einem Abschnitt mit einem Strahlenimpuls oder mehreren Shahlenimpulsen behandelt werden.

Bezüglich der Leistung eines gepulsten Strahles ist festzuhalten, daß diese bei einer Pulsdauer zwischen etwa $10^{-3}$ und etwa $10^{-15}$ Sekunden, vorzugsweise zwischen etwa $10^{-3}$ und $10^{-8}$ Sekunden, zwischen etwa 5 und etwa 500 mJ/cm$^2$, vorzugsweise zwischen etwa 20 und etwa 50 mJ/cm$^2$, liegt. Selbstverständlich ist es auch möglich, die Faser, das Filament, Garn, Flächengebilde und/oder Haufwerk mit einer Vielzahl von Laserstrahlimpulsen, vorzugsueise zwischen etwa 5 und etwa 20, bei einer Wiederholungsrate von etwa 1 bis 250 Hz, insbesondere zwischen etwa 1 bis 5 Hz oder etwa 200 bis etwa 250 Hz, zu behandeln.

Auch können die vom Laser erzeugten Strahlen bzw. der Strahl mittels einer entsprechenden in dem Strahlengang angeordneten Einrichtung aufgeweitet werden, um so einen größeren Bereich der Oberfläche zu bestrahlen. Vorzugsweise werden die Strahlen bzw. der Strahl jedoch fokussiert, um hierdurch einen entsprechend verkleinerten Oberflächenbereich mit einer erhöhten Strahlungsleistung bzw. -energie zu beaufschlagen. Durch Variation des Abstandes zwischen der Aufweitungs- bzw. Fokussiereinrichtung und der bestrahlten Oberfläche kann bei dem erfindungsgemäßen Verfahren in besonders einfacher Weise der Grad der Oberflächenstrukturierung gesteuert werden.

Wird das erfindungsgemäße Verfahren zur Ausrüstung von Fasern, Filamenten und/oder Garnen eingesetzt, so empfiehlt es sich, abhängig von dem jeweiligen Verwendungszweck, entweder die Oberfläche der Fasern bzw. Filamente oder die Oberfläche des Garnes von allen Seiten zu bestrahlen. Soll die erfindungsgemäße Strahlenbehandlung bei synthetischen Fasern bzw. Filamenten erfolgen, so bietet es sich an, diese unmittelbar im Anschluß an das Primärspinnen durchzuführen, da zu diesem Zeitpunkt die Oberfläche der Einzelfasern bzw. Einzelfilamente über ihren Umfang gesehen noch von allen Seiten frei zugänglich ist. Eine derartige Bestrahlung ist vorzugsweise immer in solchen Fällen vorzunehmen, wenn die Oberfläche der einzelnen Fasern bzw. des einzelnen Filamentes einen nennenswerten Einfluß auf die Eigenschaften der hieraus hergestellten Fertigprodukte, wie beispielsweise Garne, Flächengebilde oder Haufwerke, hat. Werden beispielsweise solche Fasern bzw. Filamente zur Herstellung von Filtern verwendet, so weisen diese im Vergleich zu den bekannten Filtern wegen der durch die Mikrostrukturierung bewirken Oberflächenvergrößerung wesentlich bessere Filtereigenschaften auf. Aus dem gleichen Grund besitzen die für Dialyseverfahren eingesetzten Hohlfasern, die entsprechend als Einzelfasern bestrahlt worden sind, im Vergleich zu nicht bestrahlten Fasern wesentlich höhere Austauschkoeffizienten. Auch vergrößert die Mikrostrukturierung die Faser-Faser- bzw. Filament-Filament-Haftung untereinander, was dazu Führt, daß die hieraus hergestellten Garne oder Vliese auch ohne Verklebung eine wesentlich höhere Festigkeit und einen besseren Garn- bzw. Vlieszusammenhalt besitzen.

Eine Bestrahlung des Garnes ist insbesondere dann vorzunehmen, wenn dessen Oberfläche entscheidend die Eigenschaften des hieraus hergestellten Fertigproduktes beeinflußt. Dies trifft beispielsweise auf beflockte oder mit Pigmentfarbstoffen bedruckte bzw. gefärbte Garne zu, da hierbei wegen der durch die Bestrahlung erzielten Oberflächen strukturierung eine wesentlich verbesserte Haftung des Beflockungsmaterials oder des Pigmentfarbstoffes an dem Garn resultiert. Auch für sehr dicht eingestellte Flächengebilde oder Haufwerke kann es empfehlenswert sein, nicht diese, sondern statt dessen die hierin verarbeiteten Garne zu bestrahlen, da die hohe Materialdichte eine allseitige Zugänglichkeit der Oberfläche der in diesen Flächengebilden bzw. Haufwerken verarbeiteten Garne erschwert.

Selbstverständlich ist es jedoch auch möglich, das erfindungsgemäße Verfahren bei Flächengebilden bzw. Haufwerken anzuwenden. Eine derartige Behandlung bietet sich allgemein gesprochen in solchen Fällen an, wo die Eigenschaften des Flächengebildes bzw. Haufwerkes entscheidend von den für eine Bestrahlung zugänglichen Oberflächen der in das Flächengebilde bzw. Haufwerk eingearbeiteten Fasern, Filamente und-/oder Garne abhingen. So lassen sich beispielsweise durch Anwendung des erfindungsgemäßen Verfahrens bei Flächengebilden die Schiebefestigkeit, deren Haftung zu Beschichtungen und pigmenthaltigen Systemen sowie deren Wasseraufnahmevermögen und damit die physiologischen Eigenschaften erheblich verbessern, was auf eine entsprechende Oberflächenvergrößerung bzw. -strukturierung zurückgeführt wird. Ferner ist es möglich, durch Anwendung des erfindungsgemäßen Verfahrens den Griff bzw. den Fall des Flächengebildes derart zu verändern, daß entsprechen locker und seidig fallende Flächengebilde hergestellt werden können.

Was das Material der Faser, des Filamentes, Garnes, Flächengebildes oder Haufwerkes anbetrifft, so ist hierzu allgemein anzumerken, daß grundsätzlich mit dem erfindungsgemäßen Verfahren jedes Material behandelt werden kann, dessen Oberfläche entsprechen linierförmig an-, aufschmelzbar bzw. abtragbar ist. Vorzugsweise werden Synthesefasern, -filamente und/oder Garne und/oder diese aufweisende Flächengebilde oder Haufwerke bestrahlt, die beispielsweise Polyester-, Polyamid-, Polyacrylnitril-, Polypropylen-, Polytetrafluorteraäthylen-, Polyurethan -, Polycarbonat-, Acetat-, Triacetat-, Aramid-, Kohlenstoff-, Graphit- und Glasfasern enthalten. Auch ist das erfindungsgemäße Verfahren auf Naturfasern, wie beispielsweise Baumwollfasern, anwendbar.

Eine andere Ausführungsform des erfindungsgemäßen Verfahrens sieht vor, daß nur bestimmte Bereiche des Garnes bzw. Flächengebildes bestrahlt werden, um so Musterungseffekte zu erzielen. Die Ursache derartiger Musterungseffekte ist in einer unterschiedlichen Lichtreflektion und/oder Mattierung zu sehen, die zwischen den bestrahlten und nicht bestrahlten Bereichen bestehen. Ein derartiges, mustermäßiges Bestrahlen kann entweder dadurch erreicht werden, daß man eine endlose Warenbahn des Garnes bzw. Flächengebildes relativ zu dem Laser bewegt und hierbei die vom Laser erzeugte Strahlung gezielt zeitweise abdeckt, oder daß man statt dessen einen von dem Laser erzeugten Lichtstrahl relativ zu der Oberfläche des Garnes bzw. Flächengebildes nach einem vorgegebenen Muster, das dem zu erzeugenden Muster entspricht, bewegt.

Das zuletzt genannte Verfahren weist den Vorteil auf, daß hierbei die Oberfläche des Garnes bzw. Flächengebildes von allen Richtungen her bestrahlt werden kann und somit in einer Richtung überwiegend orientierte Muster erzeugt werden. In den bestrahlten Bereichen tritt, wie bereits vorstehend ausgeführt, durch die Mikrostrukturierung eine Oberflächenvergrößerung auf, was weiter dazu führt, daß die bestrahlten Bereiche beim anschließenden Färben ein höheres Farbstoffabsorptionsvermögen besitzen und sich somit auch entsprechend tiefer und/oder vom Farbton her anders anfärben.

Um ein derartiges Verfahren, bei dem der Laserstrahl nach einem vorgegebenen Muster bewegt wird, auch bei endlosen Warenbahnen von Garnen bzw. Flächengebilden anwenden zu können, bestehen zwei Möglichkeiten. So sieht eine Ausführungsform eines derartigen Verfahrens vor, daß man die endlose Warenbahn jeweils schrittweise über einen bestimmten Abstand transportiert und während des Stillstandes der Warenbahn den gepulsten Laserstrahl über den jeweiligen Abschnitt derselben nach dem vorgegebenen Muster bewegt. Bei der zweiten Ausführungsform werden die endlose Warenbahn des Garnes bzw. Flächengebildes relativ zu dem Laser und der Laserstrahl nach dem vorgegebenen Muster bewegt, wobei die Transportgeschwindigkeit der Warenbahn und die Bewegungsgeschwindigkeit des gepulsten Laserstrahles aufeinander abgestimmt sind. Die zuerst genannte Ausführungsform ist insbesondere für sich quer zur Warenbahn laufrichtung erstreckende Muster und die zweite Ausführungsform insbesondere für überwiegend in Warenbahnlaufrichtung orientierte Muster geeignet.

In weiterer Ausgestaltung kann bei dem vorstehend dargelegten Verfahren auch während der Bewegung des vom Laser erzeugten gepulsten Laserstrahles dessen Wellenlänge, Energie und/oder Leistun verändert werden. Hierduch wird die Herstellung von in sich gemusterten Mustern möglich, da abhängig von der Wellenlänge, Energie und/oder Leistung des Laserstrahles ein unterschiedliches An-, Aufschmelzen und/oder Abtragen der Oberrfläche des Garnes bzw. Flächengebildes herbeigeführt wird. Auch kann man zur Herstellung derartiger, in sich gemusterter Muster als Laserstrahl ein Bündel von gepulsten Laserstrahlen verwenden, wobei einzelne Strahlen des Bündels beispielsweise eine unterschiedliche Wellenlänge aufweisen. Ebenfalls gelangt ein Bündel von Laserstrahlen dann bevorzugt zur Anwendung, wenn relativ großflächige Muster erzeugt werden sollen.

Um die vorstehend beschriebene Bewegung des Laserstrahles in eingacher Weise durchzuführen, richtet man vorzugsweise einen von einer Reflektionseinrichtung, wie beispielsweise einem dielektrischen Spigel, reflektierten Laserstrahl auf das Garn bzw. Flächengebilde und bewegt dabei die Reflektionseinrichtung nach dem vorgegebenen Muster. Wegen der relativ geringen Masse der Reflektionseinrichtung läßt sich diese relativ schnell und unproblematisch bewegen, so daß auch relativ komplizierte, verschlungene Muster erzeugt werden können. Selbstverständlich ist es jedoch auch möglich, den von dem Laser erzeugten Laserstrahl direkt auf den ausgewählten Bereich des Garnes bzw. Flächengebildes zu richten und hierbei den Laser nach dem vorgebenen Muster zu bewegen, wobei dies jedoch wegen der relativ großen Masse des Lasers eine relativ aufwendige Lagerung desselben erforderlich macht.

Ebenso kann anstelle eines einzelnen gepulstunlaserstrahles auch ein Bündel von Laserstrahlen verwendet werden, das durch geeignete, in dem Strahlengang angeordnete Einrichtungen aufgeweitet oder fokussiert ist, wodurch im ersten Fall ein größerer Bereich mit einer relativ geringeren Leistung bzw. Energie und im zweiten Fall ein entsprechend kleinerer Bereich mit einer erhöhten Leistung bzw. Energie bestrahlt werden können. Durch Variation des Abstandes zwischen der Aufweitung- bzw. Fokussiereinrichtung und dem Laser kann in besonders einfacher Weise der Grad der Oberflächenveränderung sowie die jeweils bestrahlte Fläche gesteuert werden, so daß hierdurch zusätzlich eine weitere Musterungsmöglichkeit innerhalb des Musters gegeben ist.

Die vorstehend beschriebenen Verfahren lassen sich in Vielfacher Weise anwenden. Wird beispielsweise hierfür eine Polware ausgewählt und diese Polware von der rechten Warenseite, d.h. von ihrer Polseite, mit dem gepulsten Laserstrahles bestrahlt, so können auf diese Weise besonders einfach gemusterte Polartikel hergestellt werden, die in den bestrahlten Bereichen im Vergleich zu den nicht bestrahlten Bereichen eine unterschiedliche Reflexion und/oder eine unterschiedliche Farsbtoff aufnahme aufweisen.

Wird das erfindungsgemäße Verfahren zur Herstellung von gemusterten Garnen eingesetzt, so werden die Garne vorzugsweise über ihren Umfang gesehen von allen Seiten bestrahlt. Dies kann beispielsweise dadurch erreicht werden, daß man die Oberfläche des Garnes gleichzeitig aus verschiedenen Richtungen mit mehreren Laserstrahlen, die von einer entsprechenden Anzahl von Lasern erzeugt werden, bestrahlt, wobei vorzugswei-

EP 0 245 320 B1

se die Laserstrahlen mittels konzentrisch um das Garn angeordneten Reflektionseinrichtungen, die nach dem vorgegebenen Muster bewegt werden, auf die Garnoberfläche reflektiert werden.

Um eine unerwünschte chemische Veränderung der Oberfläche der bestrahlten Faser, des Filamentes, Garns, Flächengebildes und/oder Haufwerkes zu verhindern, empfiehlt es sich, diese während der Bestrahlung mit einer Schutzgas- bzw. Inertgasatmosphäre zu umgeben. Hierfür verwendet man beispielsweise Stickstoff oder Edelgase. Ebenso kann die Bestrahlung im Vakuum durchgeführt werden. Eine derartige Verfahrensweise ist insbesondere an solchen Substraten erforderlich, die aufgrund ihres chemischen Aufbaues bei erhöhten Temperaturen leicht oxidierbar sind, wie dies beispielsweise auf Polyamide oder Polypropylene zutrifft.

Wenn man hingegen zusätzlich zur Mikrostrukturierung der Oberfläche noch eine chemische Modifizierung derselben durchführt, so bietet es sich an, bei der Laserbestrahlung das vorstehend beschriebene Schutz- bzw. Inertgas durch ein reaktionsfähiges Gas ganz oder teilweise zu ersetzen. Hierbei wird die für die chemische Modifizierung notwendige Energie von dem Laserstrahl bzw. den Laserstrahlen zur Verfügung gestellt.

Als Erklärung für die bei einer derartigen Ausführungsform des erfindungsgemäßen Verfahrens auftretende chemische Modidizierung der Oberfläche wird angenommen, daß bei dem überwiegand, linienförmigen An-, Aufschmelzen und/oder Abtragen der bestrahlten Oberfläche eine entsprechende Spaltung der sich an der Oberfläche befindlichen Makromoleküle der Polymeren stattfindet, wodurch reaktive Zentren gebildet werden. Diese reaktiven Zentren reagieren dann mit dem bei der Bestrahlung anwesenden reaktionsfähigen Gas. Ebenso ist es möglich, daß gleichzeitig oder ausschließlich durch die Laserbestrahlung das dabei anwesende Gas in einen reaktionsfähigen Zustand, beispielsweise durch Radikalisierung oder Ionisierung, zersetzt wird, und das so aktivierte Gas mit den entsprechenden an- bzw. aufgeschmolzenen Bereichen des Oberfläche der Fasern, des Filaments, Garnes, Flächengebildes und/oder Haufwerks reagiert.

Ein derartiges Verfahren weist den Vorteil auf, daß durch Variation der Bedingungen der Laserbestrahlung, beispielsweise durch Veränderung der Zeit, bestrahlten Fläche, Energie und/oder Wellenlänge, der zugeführten Gasmenge und der chemischen Zusammensetzung der Gasatmosphäre, die jeweils erzielte chemische und physikalische Oberflächenmodifizierung besonders gut steuerbar ist. Allgemein gilt hierbei, daß mit zunehmender Energie der Laserbestrahlung und steigender Reaktionsfähigkeit des eingesetzten Gases bzw. der eingesetzten Gase der Grad der Oberflächenmödifizierung zunimmt. Darüberhinaus findet beim erfindungsgemäßen Verfahren vorzugsweise die chemische Modifikation der bestrahlten Faser, des Filamentes, Garnes, Flächengebildes und/oder Haufwerks über deren bzw. dessen Dicke gesehen nur in einem eng begrenzten Oberflächenbereich statt, so daß hierbei beispielsweise keine Festigkeitsverluste oder Veränderungen der übrigen thermisch-mechanischen Eigenschaften, wie z.B. dem Kraft-Dehnungs-Verhalten, auftreten.

Grundsätzlich kann für ein derartiges Verfahren jedes Gas verwendet werden, das an sich reaktionsfähig ist oder das durch die Laserbestrahlung in ein reaktionsfähiges Gas verwandelt wird. Vorzugsweise werden saure oder basische Gase verwendet, bei denen es sich beispielsweise um Sauerstoffverbindungen des Kohlenstoffs, Stickstoffs sowie Schwefels und/oder um Wasserstoffverbindungen des Stickstoffs und/oder stickstofforganische Verbindungen, wie beispielsweise Amine, handelt. So lassen sich beispielsweise durch Verwendung von Kohlendioxid, Schwefeldioxid oder Schwefeltrioxid während der Bestrahlung chemisch modifizierte Oberflächen erzeugen, bei denen die an der Oberfläche befindlichen Makromoleküle zusätzlich saure Gruppen aufweisen. Sollen hingegen die an der Oberfläche befindlichen Makromoleküle zusätzliche basische Gruppen besitzen, so ist es hierfür lediglich erforderlich, während der Bestrahlung entsprechende Gase, wie beispielsweise Amine oder Ammoniak, einzusetzen. Auch kann bei dem erfindungsgemäßen Verfahren die chemische Modifikation der Oberfläche derart durchgeführt werden, daß die Makromoleküle im Oberflächenbereich sowohl saure als auch basische Gruppen aufweisen. Hierfür ist es lediglich notwendig, zunächst die Laserbestrahlung in einer sauren Gasatmosphäre und anschließend eine zweite Laserbestrahlung in einer basischen Gasatmosphäre oder umgekehrt durchzuführen.

In weiterer Ausgestaltung des erfindungsgemäßen Verfahrens können anstelle der vorher beschriebenen Gase auch eine Interhalogenverbindung und/oder eine Halogenwasserstoffverbindung verwendet werden. Hierdurch werden im Bereich der bestrahlten Oberfläche entsprechend halogenierte Makromoleküle erzeugt, die als reaktive Zentren für weitere Reaktionen, beispielsweise Vernetzungs- oder Pfropfreaktionen, zur Verfügung stehen.

Wird als reaktionsfähiges Gas eine organische Verbindung eingesetzt, die mindestens eine Doppel- oder Dreifachbindung besitzt, so können hierdurch in ausgewählten Bereichen der Oberfläche verzweigte Makromoleküle erzeugt werden, die abhängig von der jeweils eingesetzten organischen Verbindung ggf. in der Seitenkette zusätzlich noch oligomerisierbar bzw. polymerisierbar sind.

Ebenso können als reaktionsfähiges Gas bei dem erfindungsgemäßen Verfahren stickstoff-, kohlenstoff-, sauerstoffhaltige Gase, wie beispielsweise Methylisocyanat, eingesetzt werden. Auch Phosgen ist geeignet, um reaktionsfähige Zentren auf der Oberfläche der bestrahlten Substrate zu erzeugen.

Weist das bestrahlte polymere Substrat blockierte reaktionsfähige Gruppen, wie beispielsweise blockierte Isocyanate auf, so können diese durch die Bestrahlung in einen reaktionsfähigen Zustand überführt werden, was entsprechende einseitige oder allseitige Oberflächenvernetzungen bewirkt.

Die Auswahl des Lasers richtet sich bei dem erfindungsgemäßen Verfahren, bei dem zusätzlich zur Mikrostrukturierung noch eine chemische Modifizierung der Oberfläche durchgeführt wird, nach dem jeweils zu behandelnden Fasersubstrat,der gewünschten chemischen und physikalischen Oberflächenveränderung sowie der hierfür erforderlichen Energie, Wellenlänge und Leistung des von dem Laser erzeugten Lichtstrahls. Grundsätzlich können alle gepulsten Gaslaser verwendet werden, die in der Lage sind, Lichtstrahlen mit einer entsprechenden Leistung zu erzeugen, die groß genug ist, um die gewünschte Mikrostrukturierung und vorstehend beschriebene Aktivierung der bestrahlten Bereiche der Oberfläche und/oder der verwendeten Gase zu bewerkstelligen. Vorzugsweise werden hierfür die bereits vorstehend beschriebenen Laser verwendet.

Auch kann der gepulste Laserstrahl fokussiert oder aufgeweistet werden, wie dies bereits vorstehend beschrieben ist. Hierdurch kann nicht nur der Grad der Mikrostrukturierung, sondern auch gleichzeitig der Grad der chemischen Oberflächenmodifizierung einfach gesteuert werden.

Die vorliegende Erfindung betrifft desweiteren eine Vorrichtung zur Durchführung des Verfahrens. Hierbei umfaßt die erfindungsgemäße Vorrichtung eine Fördereinrichtung für eine endlose Bahn von Fasern, Filamenten, Garnen, Flächengebilden oder Haufwerken und einen auf die endlose Bahn gerichteten, zwei die Strahlung erzeugende Laser, die auf entgegungesehten Seiten der Bahn augeordnet sind.

die Fördereinrichtung transportiert die endlose Bahn kontinuierlich mit einer bestimmten Transportgeschwindigkeit. Durch Abstimmung der Transportgeschwindigkeit, des vom Laser bestrahlten Bereiches und der Leistung bzw..der Energie der erzeugten Strahlen auf das jeweils zu behandelnde Substrat ist es möglich, die hierdurch erreichte Oberflächenveränderung, die sich in einer Mikrostrukturierung und ggf. einer chemischen Modifizierung ausdrückt, zu steuern.

Eine weitere Ausführungsform der erfindungsgemäßen Vorrichtung sieht vor, daß zwischen den Lasern und der endlosen Bahn in dem Strahlengang entweder eine Aufweitungseinrichtung oder eine Fokussiereinrichtung angeordnet ist, wodurch die Fläche des bestrahlten Bereiches zu vergrößern bzw. zu verkleinern ist.

Eine besonders für Fasern, Filamente, oder Garne geeignete Ausführungsform der erfindungsgemäßen Vorrichtung besitzt anstelle des zweiten Lasers eine Reflektionseinrichtung, die die vom ersten Lasen erzeugte Strahlung derart reflektiert, daß hierdurch die gesamte Oberfläche der Fasern, Filamente oder Garne über ihren Umgang gessehen gleichmäßig bestrahlt wird. Vorzugsweise handelt es sich bei dieser Reflektionseinrichtung um einen dielektrischen Spiegel.

Das erfindungsgemäße Verfahren läßt sich in vielfacher Weise verwenden. So kann es beispielsweise bei Fasern, Filamenten, Garnen, Flächengebilden oder Haufwerken angewendet werden, die durch spätere Beschichtung zu Verbunkstoffen, wie beispielsweise faserverstärkten Kunststofen, verarbeitet werden. Wird hierbei die Laserbestrahlung in Anwesenheit eines reaktionsfähigen Gases durchgeführt, so bewirkt dies insbesondere bei Synthesefasern bzw. -filamenten und/oder Garnen, wie beispielsweise Polyester-, Polyamid, Polyacrylnitril-, Polypropylen-, Polytetrafluoräthylen-, Polyurethan-, Polycarbonat-, Acetat-, Triacetat-, Aramid-, Kohlenstoff-, Graphit- sowie Glasfasern, daß deren Oberfläche nicht nur mikrostrukturiert, sondern auch gleichzeitig chemisch modifiziert wird. Dies hat zur Folge, daß hierdurch die Haftung zwischen der Beschichtung und den darin eingearbeiteten Fasern, Filamenten, Garnen, Flächengebilden bzw. Haufwerken deutlich verbessert wird. Das während der Bestrahlung eingesetzte Gas bzw. die Gase werden auf die chemische Zusammensetzung der Beschichtungen derart abgestimmt, daß im Bereich der Oberfläche der bestrahlten Substrate durch chemische Modifizierung bzw. Pfropfung solche reaktiven Gruppen erzeugt werden, die mit der Beschichtung, oder allgemein gesprochen mit der Matrix, unter Ausbildung einer physikalischen und/oder chemischen Bindung reagieren. Gleiches gilt für die Bearbeitung von Oberflächen von textilen Polymeren, die zu metallkaschierten Textilien, Laminaten und durch Spattern zu metallisierten Filamenten bzw. Garnen verwendet werden, die beispielsweise als Schutzbekleidung für Radarstrahlen oder für Reinräume in der pharmazeutischen oder elektrischen Industrie verwendet werden. Auch bewirkt die Mikrostrukturierung allein oder in Verbindung mit der chemischen Modifizierung bei faserverstärktem Beton eine Verbesserung der Haftung zwischen dem Beton und der darin eingearbeiteten Fasern, Flächengebilde bzw. Haufwerke. Ebenso kann ein nach dem erfindungsgemäßen Verfahren behandeltes Flächengebilde bzw. Haufwerk als Grundschicht für Verbundstoffe, die beispielsweise zu Bremsscheiben oder Reifencord verarbeitet werden, dienen.

Auch im medizinischen Bereich finden die nach dem erfindungsgemäßen Verfahren bearbeiteten Fasern, Filamente, Garne, Flächengebilde bzw. Haufwerke Anwendung. So können beispielsweise hieraus chirurgisches Nähmaterial oder prothetische Artikel, wie z.B. Künstliche Adern, hergestellt werden, die im Vergleich zu nicht bestrahlten und in der Oberfläche nicht mikrostrukturierten und/oder chemisch modifizierten Substraten ein wesentlich höheres Resorptionsvermögen besitzen.

Ebenso weisen mikrostrukturierte Hohlfasern, die für Dialyseverfahren eingesetzt werden, im Vergleich zu

8

nicht bestrahlten Hohlfasern wesentlich höhere Austauschkoeffizienten auf, wobei diese noch durch eine zusätzliche chemische Modifizierung der Oberfläche weiter verbessert werden können. Gleiches gilt für Filter, die aus bestrahlten Fasern, Filamenten, Garnen, Flächengebilden oder Haufwerken hergestellt wurden. Hierbei weisen diese im Vergleich zu den bekannten Filtern wesentlich bessere Filtereigenschaften auf, was sich beispielsweise in einem höheren Abscheidevermögen, längeren Standzeiten etc., ausdrückt. Derartige Filter sind sowohl hervorragend für die Naßfiltration, wie beispielsweise zum sterilen Filtern von Getränken, wie z.B. Bier, Wein etc., als auch für die Trockenfiltration, insbesondere zur Abscheidung von Feinststäuben aus Reinräumen oder in Gasmasken, verwendbar.

Vorteilhafte Weiterbildungen der erfindungsgemäßen Faser, des Filaments, Garnes, Flächengebildes und/ oder Haufwerkes sowie des erfindungsgemäßen Verfahrens und der erfindungsgemäßen Vorrichtung zur Durchführung des Verfahrens sind in den Unteransprüchen angegeben.

Die Erfindung wird nachfolgend anhand von Ausführungsbeispielen in Verbindung mit der Zeichnung näher erläuter. Es zeigen :

Figur 1 eine Rasterelektronenmikroskopaufnahme eines Abschnittes eines bestrahlten Polyestergewebes bei einer 800-fachen Vergrößerung ;

Figur 2 eine Rasterelektronenmikroskopaufnahme eines Oberflächenbereiches eines Polyestermultifilamentgarnes bei einer 2800-fachen Vergrößerung ;

Figur 3 eine graphische Darstellung des Abstandes der Vertiefungen bzw. Erhebungen in Abhängigkeit von der Energiedichte der Laserstrahlen ;

Figur 4 eine erste Ausführungsform einer Vorrichtung zum Bestrahlen von Flächengebilden ; und

Figur 5 eine weitere Ausführungsform der Vorrichtung für eine Bestrahlung von Garnen.

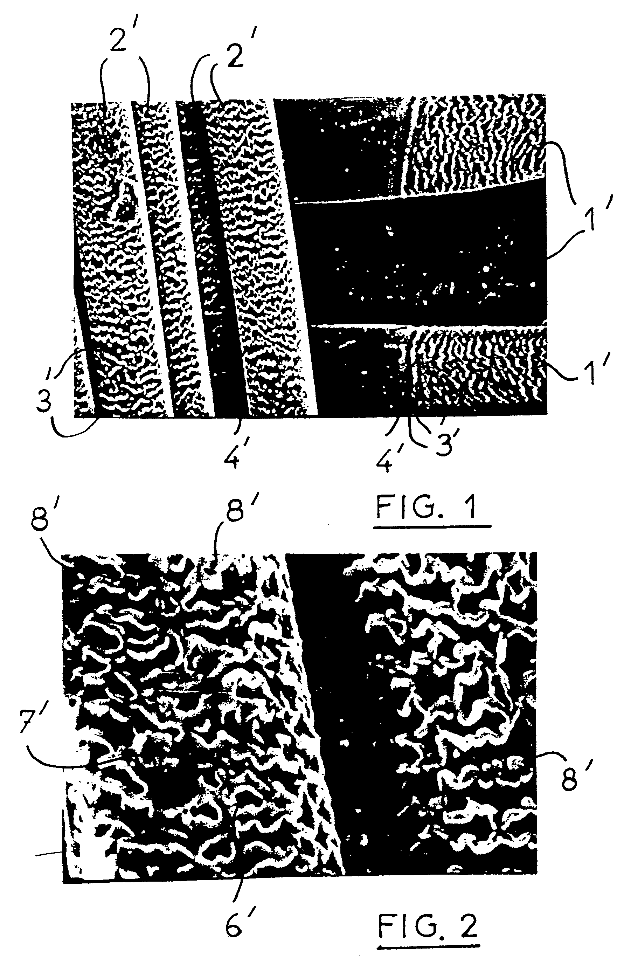

In Figur 1 ist eine rasterelektronenmikroskopische Aufnahme eines bestrahlten Polyestergewebes in 800-facher Vergrößerung dargestellt. Hierbei wurde ein Abschnitt des Gewebes mit einem KrF-Excimerlaser bei einer Wellenlänge von 248 nm bestrahlt, wobei 10 Strahlenimpulse mit einer Wiederholungsrate von 5 Hz und einer Energie von 200 mJ/ cm$^2$ pro Puls vom Laser abgegeben wurde. Sowohl die quer- verlaufenden Schußgarne als auch die in Längsrichtung verlaufenden Kettgarne, bei denen es sich um Fasergarne handelte, weisen eine Mikrostrukturierung auf, die aus linienförmigen, gewellten Vertiefungen 3' sowie entsprechenden Erhebungen 4' besteht, die überwiegend in Querrichtung zur Faserlängsachse angeordnet sind. Die Vertiefungen 3' bzw. die Erhebungen 4' weisen eine Tiefe bzw. Höhe zwischen etwa 0,6 und etwa 0,8 μm auf, und der Abstand zwischen benachbarten Vertiefungen 3a' und 3b' liegt zwischen etwa 2 μm und etwa 3 μm. Ihre Breite beträgt jeweils etwa 0,4 μm und etwa 0,6 μm. Darüberhinaus sind in Figur 1 beim Schußmaterial 1' nicht bestrahlte Bereiche 5' erkennbar, die dadurch zustandegekommen sind, daß das Kettmaterial 2' während der Bestrahlung diese Bereiche 5' überdeckt hat.

Die in Figur 2 abgebildete Mikrostrukturierung, bei der es sich um einen Bereich der Oberfläche eines bestrahlten Polyestermultifilamentgarnes handelt, das unter den vorstehend aufgeführten Bedingungen behandelt wurde, weist neben den zuvor beschriebenen linienförmigen Vertiefungen bzw. Erhebungen noch flächige Vertiefungen 6' sowie flächige Erhebungen 7' auf. Hierbei besitzen diese eine Fläche von etwa 2 bis etwa 4 μm$^2$ und eine Tiefe bzw. Höhe von etwa 2-3 μm. Ihre Verteilung ist völlig unregelmäßig über die Faseroberfläche. Daneben sind punktuelle Vertiefungen 8' vorhanden, die eine Fläche von etwa 1 μm$^2$ bei einer Tiefe von 1 μm bis 2 μm besitzen. Auch sie sind unregelmäßig über die Oberfläche des Multifilamentgarnes verteilt.

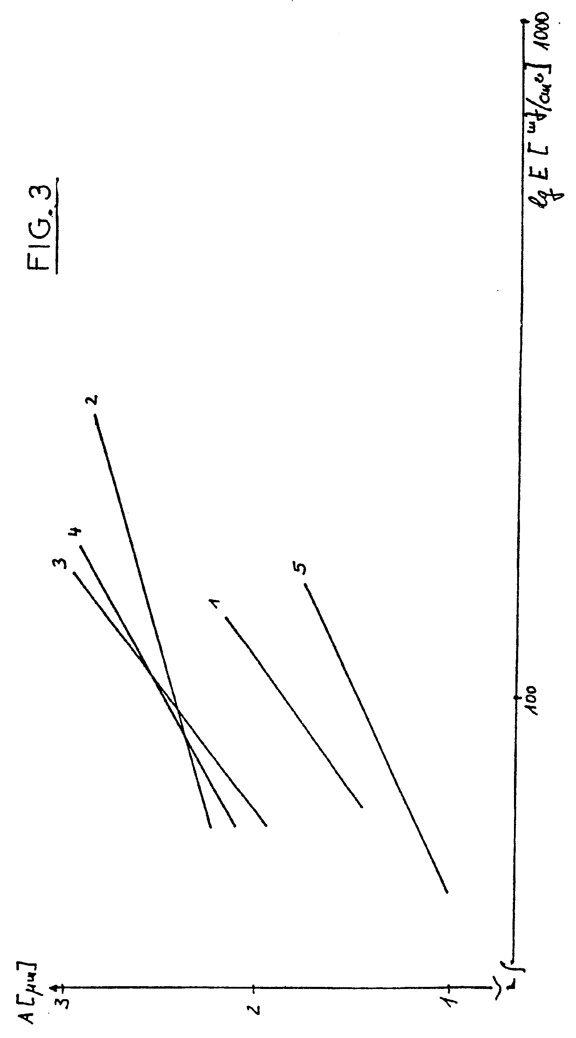

Die Figur 3 stellt den Abstand von benachbarten linienförmigen Vertiefungen in Abhängigkeit vom Logarithmus der Energiedichte pro Puls dar, wobei verschiedene Fasern bzw. Gewebe mit unterschiedlichen Wellenlängen des Laserstrahls behandelt wurden. Allgemein ist hierzu anzumerken, daß durch den ersten Strahlenimpuls die eigentliche Form der Mikrostrukturierung bestimmt wird, während die weiteren Strahlenimpulse im wesentlichen die Tiefe der Vertiefungen und die Höhe der Erhöhungen vergrößern und nur geringfügig den Abstand verändern. Bei dem in Figur 3 abgebildeten Diagramm wurde jeweils nur ein Strahlenimpuls unter Variation der Energie auf die Probe abgeschossen. Die mit 1 und 3 bezeichneten Geraden gelten für eine Polyesterfaser mit trilobalem Querschnitt, die mit 2 bezeichnete Gerade für ein Polyamidsiebgewebe und die mit 4 und 5 bezeichneten Geraden für zwei Polyestersiebgewebe. Die Geraden 1, 2 und 5 wurden durch Bestrahlung der Proben mit einem ArF-Excimer-Laser bei 193 nm und die Geraden 3 und 4 durch Bestrahlung der Proben mit einem KrF-Excimer-Laser bei 248 nm gewonnen, wobei die Energiedichte der Strahlenimpulse in dem angegebenen Bereich variiert wurde.

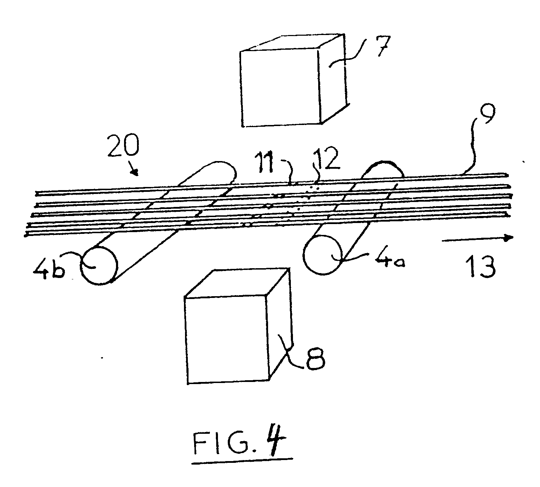

Eine in Figur 4 gezeigte Ausführungsform einer insgesamt mit 20 bezeichneten Vorrichtung dient zur Ausrüstung einer endlosen Bahn eines Garnes 9, die aus einer Garnschar von 5 nur beispielhaft abgebildeten Einzelgarnen besteht. Hierbei richtet sich die Zahl der Einzelgarne nach der Fläche, die der Laser bestrahlen kann. Die Schar der Garne wird mittels einer Fördereinrichtung in Pfeilrichtung 13 mit einer bestimmten, auf die gewünschte Oberflächenveränderung und die Leistung der Laserstrahlung angepaßten Geschwindigkeit transportiert, wobei die Fördereinrichtung eine nicht dargestellte Abzugsvorrichtung sowie zwei Walzen 4a und 4b umfaßt. Oberhalb und unterhalb der Garnbahn 9 ist jeweils ein Laser 7 bzw. 8 angeordnet, deren Strahlen mittels nicht gezeigter Aufweitungseinrichtungen derart auf die Bahn gerichtet sind, daß der obere Laser 8 einen unteren, gestrichelt gezeichneten Garnabschnitt 12 bestrahlt. Eine derartige Anordnung stellt sicher, daß über den Garnumfang gesehen eine gleichmäßige Oberflächenveränderung gewährleistet ist. Um ein Durchhängen der Garne und somit ein Verändern ihres Abstands zu dem oberen Laser 7 bzw. dem unteren Laser 8 zu verhindern, ist der Abschnitt zwischen den beiden Walzen 4a und 4b.

Zur besseren Verdeutlichung der durch das erfindungsgemäße Verfahren erreichbaren Vorteile dienen die nachfolgenden Beispiele.

Beispiel 1 :

Auf einer Laboranlage wurde ein Polyestergewebe mit einem Quadratmetergewicht von 80 g und einer Kettdichte von 25 Fäden/cm und einer Schußdichte von 35 Fäden/cm mit einer Laserstrahlung behandelt. Als Laser wurde ein KrF-Excimer-Laser bei einer Hellenlänge von 248 nm verwendet, wobei eine Flicke von 2 cm² sowohl mit einem Impuls als auch mit zehn Impulsen bestrahlt wurde. Die Leistung eines Strahlenimpulses betrug 400 mJ. Von den so bestrahlten Proben wurde gravimetrisch die Wasseraufnahme nach einer 48-stündigen Lagerung im Normklima bei 20°C und 65% relativer Feuchtigkeit gemessen. Hierbei konnten folgende Ergebnisse erzielt werden :
Unbehandelte Probe : Wasseraufnahme 0,5%.
Behandelte Probe, 1 Strahlenimpuls : Wasseraufnahme 4%.
Behandelte Probe, 10 Strahlenimpulse : Wasseraufnahme 7%.

Beispiel 2 :

Ein Polyestergewebe mit einem Quadratmetergewicht von 100 g und einer Kettdichte von 40 Fäden/cm und einer Schußdichte von 50 Fäden/cm wurde wie in Beispiel 1 beschrieben bestrahlt, wobei für diesen Versuch ein ArF-Excimer-Laser bei einer Wellenlänge von 193 nm verwendet wurde. Die Leistung des Strahlenimpulses betrug 200 mJ. Hierbei konnten folgende Wasseraufnahmewerte gemessen werden :
Nicht behandelte Probe : Wassseraufnahme 0,4%.
Behandelte Probe, 1 Strahlenimpuls : Wasseraufnahme 2,3%.
Behandelte Probe, 10 Strahlenimpulse : Wasseraufnahme 4,9%.

Zu den beiden vorstehenden Beispielen ist anzumerken, daß in beiden Fällen die Probe jeweils nur von einer Seite mit einem bzw. 10 nicht fokussierten Strahlenimpuls bzw. Strahlenimpulsen behandelt wurde.

Beispiel 3 :

Von dem in Beispiel 1 aufgeführten Gewebe wurde jeweils ein Abschnitt einer nicht behandelten, einer mit einem Strahlenimpuls und einer mit 10 Strahlenimpulsen behandelten Probe vollflächig mit einem Pigmentdruck versehen. Hierbei wies die Druckpaste 280 g Binder (200 g Acramin VLC, 30 g Acraconc 0,50 g Acrafix M, 20 g Farbstoff (Acramin Marineblau FBC), 3 g Triäthanolamin und 697 g Wasser auf. Nach Aufbringen der Druckpaste, Trocknen bei 120°C während einer Minute und Kondensieren bei 170°C während drei Minuten wurde auf einem Crockmeter die Haftfestigkeit des Druckes auf dem Gewebe geprüft.

Benotung des Anschmutzens des Begleitgewebes aus Baumwolle gemäß Graumaßstab
nach

| | 50 Reibzyklen | 100 Reibzyklen | 250 Reibzyklen |
|---|---|---|---|
| unbehandelte Probe | 2 - 3 | | - |
| bestrahlte Probe, 1 Strahlenimpuls | 3 - 4 | 3 | 2 - 3 |
| bestrahlte Probe, 10 Strahlen- impulse | 4 | 4 | 3 - 4 |

Wie der vorstehenden Tabelle zu entnehmen ist, ist die Haftung des Pigmentdrucks bei der unbehandelten Probe wesentlich schlechter als bei den bestrahlten Proben, wie dies durch die entsprechenden Noten insbesondere nach 100 bzw. 250 Reibzyklen zum Ausdruck kommt.

Wie die Beispiels 1 und 2 belegen, wird durch Anwendung der erfindungsgemäßen Verfahrens die Wasseraufnahme, insbesondere von Synthesefasern, erheblich verbessert, so daß die hieraus hergestellte Kleidung hervorragende physiologische Eigenschaften besitzt. Dies drückt sich einerseits durch eine verbesserte Feuchtigkeits- bzw. Wasseraufnahme und andererseits durch einen vergrößerten Wasseraustausch aus, so daß eine derartige Kleidung sowohl die Vorteile der natürlichen Fasern bezüglich des Tragekomforts als auch die Vorteile der synthetischen Fasern bezüglich der einfachen Pflege aufweist. Darüberhinaus wird durch das erfindungsgemäße Bestrahlen von Fasern, Filamenten, Garnen und/oder von diese aufweisenden Flächengebilden bzw. Haufwerken aus Synthesefasern bzw. diese enthaltenden Garnen erreicht, daß die als besonders unangenehm empfundene elektrostatische Aufladung nicht oder nur in einem sehr untergeordneten Maße auftritt, was auf die vorstehend beschriebene erhöhte Wasseraufnahme zurückgeführt wird. Somit kann durch Anwendung des erfindungsgemäßen Verfahrens in besonders einfacher Weise eine permanente antistatische Ausrüstung von Fasern etc. erreicht werden, was nicht nur für Kleidungsstücke, sondern auch beispielsweise für Teppichböden oder Stanbfilter äußert interessant ist.

Auch kann durch Anwendung des erfindungsgemäßen Verfahrens bei Faserverbundwerkstoffen die Haftung zwischen der die Fasern einbettenden Matrix und den Fasern erheblich verbessert werden, was dazu führt, daß derartige Faserverbundwerkstoffe eine erheblich verbesserte Festigkeit und eine geringere Abriebneigung und somit eine vergrößerte Lebensdauer besitzen. Vorzugsweise werden hierbei die Fasern unmittelbar nach dem Spinnen bestrahlt, da zu diesem Zeitpunkt die Faser über ihren Umfang gesehen noch von allen Seiten frei zugänglich ist und somit eine optimale Oberflächenaufrauhung erzielt werden kann, was als Ursache für die Verbesserung der Haftung zwischen der Matrix und den Fasern angesehen wird. Ein solches Verfahren ist allgemein gesprochen insbesondere bei solchen Fasern anzuwenden, die eine glatte, nicht profilierte Oberfläche besitzen, was beispielsweise auf PTFE- oder Aramid-Fasern bzw. entsprechenden Faserischungen damit zutrifft.

Beispiel 4 :

Eine Polyesterwebware mit einem Quadratmetergewicht von 99 g und einer Kettdichte von 375 Fäden/dm und einer Schußdichte von 340 Fäden/dm wurde nach den bekannten Verfahren gewaschen und anschließend bei 190°C fixiert. Hierbei wiesen die Kettfäden 76 Einzelfilamente und einen Titer von 105 dtex und die Schußfäden ebenfalls 76 Einzelfilamente und einen Titer von 156 dtex auf.

Ein Abschnitt des vorstehend genannten Polyestergewebes wurde mit zwei von einem ArF-Excimer-Laborlaser erzeugten Laserstrahlenimpulsen bestrahlt, wobei die Leistrung der Laserstrahlenimpulse 57 mJ/cm² und die Wellenlänge 193 nm betrug. Nachdem die beiden Strahlenimpulse auf die Oberfläche des Abschnittes des Polyestergewebes gerichtet worden waren, wurde der Laserstrahl bei einem vorgegebenen, geometrischen Muster derart bewegt, daß ein zu dem Abschnitt benachbarter Bereich ebenfalls mit zwei Laserstrahlenimpulsen behandelt wurde.

Anschließend wurde das so bestrahlte Polyestergewebe auf einer Laborfärbeanlage in einem Flottenverhältnis von 1 : 15 gefärbt, wobei die Färbeflotte die folgende Zusammensetzung aufwies :

1% C.I. Disperse Blue 79, 200%-ig

0,5 g/l eines Dispergiermittels auf Basis eines Kondensationsproduktes aromatischer Sulfonsäuren

0,25 ml/l Essigsäure

Die Farbstoffe wurden in bekannter Weise angeteigt, und die Färbung wurde bei einer Starttemperatur von 60°C begonnen. Anschließend wurde die Färbeflotte mit 1°C/min auf 130°C erhitzt. Nach einer Verweilzeit von 30 Minuten bei der vorstehend aufgeführten Temperatur wurde mit 1°C/min auf 80°C abgekühlt. Hieran schloß sich eine alkalisch reduktive Nachreinigung mit Natriumhydrosulfid in der üblichen Konzentration an.

Nach dem Färben und Trocknen wurde die Probe zunächst visuell beurteilt. Hierbei konnte man feststellen, daß die gemusterten Bereiche wesentlich dunkler angefärbt waren. Das durch die Bewegung des Laserstrahles erzeugte geometrische Muster war deutlich sichtbar und besaß eine scharfe Kontur.

Aus den bestrahlten und nicht bestrahlten Bereichen des Polyestergewebes wurden Abschnitte entnommen, deren Farbstoffkonzentration nach Auflösen des Fasersubstrates fotometrisch quantitativ bestimmt wurde. Hierbei wurde festgestellt, daß die bestrahlte Probe im Vergleich zu der nicht bestrahlten Probe eine um 8% höhere Farbstoffaufnahme aufwies.

Hinsichtlich der Reibechtheit, der Schweißechtheit, der Lichtechtheit und der Trockenhitzefixierechtheit bestanden keine Unterschiede zwischen den Färbungen der bestrahlten und nicht bestrahlten Bereiche.

Beispiel 5 :

Das vorstehend beschriebene Polyestergewebe wurde analog zu Beispiel 4 bestrahlt, wobei jedoch 10 Laserstrahlenimpulse mit einer Leistung von 85, 2 mJ/cm² auf den ausgewählten Bereich der Oberfläche gerichter wurden. Anschließend wurde der Laserstrahl nach dem vorgegebenen geometrischen Muster auf einen benachbarten Bereich bewegt und hierauf erneut die 10 Laserstrahlenimpulse abgeschossen.

Die so behandelte Probe des Polyestergewebes wurde wie vorstehend beschrieben gefärbt und nachbehandelt.

Nach dem Färben und Trocknen wurde die Probe visuell beurteilt, wobei hierbei festzustellen war, daß die bestrahlten Bereiche noch wesentlich tiefer bzw. dunkler angefärbt waren, so daß das geometrische Muster noch deutlicher zum Ausdruck kam. Die anschließend durchgeführte farbmetrische Auswertung ergab, daß die bestrahlten Bereiche im Vergleich zu den nicht bestrahlten Bereichen um 35% dunkler angefärbt waren. Die Konturenschärfe des so erzeugten Musters war ausgezeichnet. Auch hierbei wurde festgestellt, daß hinsichtlich der vorstehend aufgeführten Echtheiten der Färbungen keinerlei Unterschiede bestanden.

Beispiel 6 :

Ein gemäß Beispiel 5 bestrahltes Polyestergewebe wurde nach der Bestrahlung mit folgender Farbstoffkombination gefärbt :

0,7% C.I. Disperse Blue 56

0,7% C.I. Disperse Red 1

0,7% C.I. Disperse Yellow 60

Die Färbung sowie die reduktive Nachreinigung wurde gemäß Beispiel 4 durchgeführt.

Nach dem Färben und Trocknen wurde die Probe visuell beurteilt. Hierbei konnte festgestellt werden, daß die Farbstoffaufnahme in den durch die Bestrahlung hergestellten gemusterten Bereichen deutlich höher war als in den nicht bestrahlten Bereichen, wobei der Farbtiefenunterschied mit etwa 30 bis etwa 40% geschätzt wurde. Danaben bestand noch eine Farbtondifferenz zwischen den bestrahlten und nicht bestrahlten Bereichen. So war der nicht bestrahlte Bereich des Polyestergewebes in einem oliv-grünen Braun angefärbt, während die bestrahlten Bereiche eine Farbtonverschiebung zu einem wesentlich volleren, rötlich-blauen Braun zeigten.

Zusätzlich zu der vorstehend beschriebenen Färbung wurde eine weitere Färbung mit der gleichen Farbstoffkombination durchgeführt, wobei die Farbstoffflotte zusätzlich noch 0,25 g/l Egalisiermittel auf Basis einer Zubereitung aus Alkylphenol und Fettsäurepolyglykoläthern aufwies.

Der Vergleich zwischen den Färbungen mit und ohne Egalisiermittel ergab, daß die Differenz zwischen den bestrahlten und nicht bestrahlten Bereichen bei der Färbung, bei der kein Egalisiermittel verwendet wurde, wesentlich stärker war. Eine Verschlechterung der vorstehend aufgeführten Echtheiten in den bestrahlten Bereichen konnte nicht festgestellt werden. Vergleichende Reißkraftmessungen ergaben, daß keinerlei Unterschiede in der Festigkeit zwischen den bestrahlten und den nicht bestrahlten Bereichen bestand.

<u>Beispiel 7 :</u>

Auf einer Laboranlage wurde ein Polyestergewebe mit einem Quadratmetergewicht von 80 g und einer Kettdichte von 25 Fäden/cm und einer Schußdichte von 32 Fäden/cm mit einer Laserstrahlung behandelt. Als Laser wurde ein KrF-Excimer-Laser bei einer Wellenlänge von 248 nm eingesetzt, wobei eine Fläche von 2 $cm^2$ sowohl mit einem Impuls als auch mit 10 Impulsen bestrahlt wurde. Die Leistung eines Strahlenimpulses betrug 400 mJ. Die Bestrahlung wurde in einer $CO_2$-und in einer $SO_2$-Gasatmosphäre durchbeführt.

Von den so bestrahlten Proben wurde gravimetrisch die Wasseraufnahme nach einer 48-stündigen Lagerung im Normklima bei 20°C und 65% relativer Feuchtigkeit gemessen. Hierbei konnten folgende Ergebnisse erzielt werden :

unbehandelte Probe, Wasseraufnahme 0,5% ;

behandelte Probe, 1 Strahlenimpuls, $CO_2$-Atmosphäre, Wasseraufnahme 6% ;

behandelte Probe, 10 Strahlenimpulse, $CO_2$-Atmosphäre, Wasseraufnahme 8% ;

behandelte Probe, 1 Strahlenimpuls, $SO_2$-Atmosphäre, Wasseraufnahme 8% ;

behandelte Probe, 10 Strahlenimpulse, $SO_2$-Atmosphäre, Wasseraufnahme 10%.

Zum Nachweis der bei der Bestrahlung in der sauren Gasatmosphäre auf bestimmten Bereichen der Oberfläche gebildeten sauren Gruppen diente ein Anfärbetest mit einem basischen Farbstoff gemäß Melliand-Textilber. 60 (1979, 272).

Bei dem Anfärbetest färbte sich die unbestrahlte Probe nicht an, während sich alle bestrahlten Proben in der Reihenfolge $CO_2$-Atmosphäre, 1 Strahlenimpuls ; $CO_2$-Atmosphäre, 10 Strahlenimpulse ; $SO_2$-Atmoshäre, 1 Strahlenimpuls ; $SO_2$-Atmosphäre, 10 Strahlenimpulse mit zunehmender Intensität anfärbten, wobei die Anfärbung punktuell und linienförmig war. Hieraus ist zu schließen, daß durch die Bestrahlung saure Gruppen auf der Oberfläche des Gewebes entstanden sind, die auf eine Spaltung der Oberflächenmakromoleküle und Reaktion mit den sauren Gasen zurückgeführt werden.

Ferner wurde von allen Proben der Oberflächenwiderstand nach der Ringelektrodenmethode gemessen. Die Proben wurden vorher ausreichend im Normklima (23°C, 65% relative Luftfeuchtigkeit) konditioniert. Hierbei ergaben sich folgende Werte :

unbehandelte Probe $10^{13}$ Ohm ;

$CO_2$-Atmosphäre, 1 Strahlenimpuls $10^{10}$ Ohm ;

$CO_2$-Atmosphäre, 10 Strahlenimpulse $10^9$ Ohm ;

$SO_2$-Atmosphäre, 1 Strahlenimpuls $10^8$ Ohm ;

$SO_2$-Atmosphäre, 10 Strahlenimpulse $10^7$ Ohm.

Wie die vorstehenden Werte belegen, weist das in der Oberfläche chemisch und physikalisch modifizierte Gewebe deutlich bessere Oberflächenwiderstände auf, was auf die Anwesenheit von polaren Gruppen zurückgeführt wird. Somit sind die in einer reaktionsfähigen Gasatmosphäre bestrahlten Proben ohne Applikation einer entsprechenden Ausrüstung permanent antistatisch.

<u>Beispiel 8 :</u>

Das in Beispiel 7 beschriebene Polyestergewebe wurde auf einer Laboranlage bestrahlt. Hierbei wurde ein ArF-Excimer-Laser bei einer Wellenlänge von 193 nm verwendet, wobei die Bestrahlung in einer $NH_3$-Atmosphäre durchgeführt wurde. Jede Probe wurde mit einem Impuls und 10 Impulsen behandelt, wobei die Leistung eines Strahlenimpulses 200 mJ betrug. Anschließend wurden eine unbehandelte Probe sowie die beiden bestrahlten Proben mit einer Zweikomponenten-Polyurethanbeschichtung versehen, Auftragsmenge 80 $g/m^2$. Nach Trocknung und Kondensation wurde die Dauerbiegefestigkeit (Balli-Flexometer) gemessen,was zu folgenden Ergebnissen führte :

| | unbehandelte Probe | 1 Strahlenimpuls | 10 Strahlenimpulse |
|---|---|---|---|
| 1. bei 20° C trocken | 150.000 Knickungen, leichtes Lösen der Beschichtung im Knickbereich | 200.000 Knickungen leichtes Lösen der Beschichtung im Knickbereich | 250.000 Knickungen, ohne Befund |
| 2. bei 20° C naß | 130.000 Knickungen Beschädigung wie bei 1 | 180.000 Knickungen, ohne Befund | 250.000 Knickungen, ohne Befund |

Wie die Ergebnisse zeigen, tritt durch die Strahlenbehandlung in der Ammoniakatmosphäre eine deutliche Verbsserung der Dauerbiegefestigkeit auf. Dies wird darauf zurückgeführt, daß zusätzlich zur Mikrostrukturierung basische Gruppen auf der Oberfläche des Gewebes entstehen, die mit den in der Polyurethanbeschichtung vorhandenen sauren Gruppen reagieren und so die Haftung der Polyurethanbeschichtung auf dem Trägergewebe verbessern.

**Ansprüche**

1. Faser, Filament, Garn und/oder diese bzw. dieses aufweisendes Flächengebilde und/oder Haufwerk, wobei diese Substrate auf ihrer Oberfläche eine unter Verwendung eines Lasers hergestellte Mikrostrukturierung aufweisen, dadurch gekennzeichnet, daß die Mikrostrukturierung überwiegend in der Form von sich quer zur Längsachse der Faser bzw. des Filamentes erstreckenden, linienförmigen Vertiefungen und/oder Erhebungen ausgebildet ist, die eine Breite bis etwa 1 µm und eine Tiefe bzw. Höhe bis etwa 10 µm, einen Abstand zwischen etwa 1 µm und etwa 5 µm aufweisen und sich über etwa 10% bis etwa 100% der Oberfläche der Faser und/oder des Filaments erstrecken.

2. Faser, Filament, Garn und/oder diese bzw. dieses aufweisendes Flächengebilde und/oder Haufwerk nach Anspruch 1, dadurch gekennzeichnet, daß die Vertiefungen bzw. Erhebungen eine Tiefe bzw. Höhe zwischen etwa 0,1 µm und etwa 4 µm, vorzugsweise 0,5 µm und 1 µm, aufweisen.

3. Faser, Filament, Garn und/oder diese bzw. dieses aufweisendes Flächengebilde und/oder Haufwerk nach einem der vorangehenden Ansprüche, dadurch gekennzeichnet, daß die linienförmigen Vertiefungen und/oder Erhebungen eine Breite bis etwa 0,5 µm und einen Abstand zwischen etwa 1 µm und etwa 3 µm besitzen.

4. Faser, Filament, Garn und/oder diese bzw. dieses aufweisendes Flächengebilde und/oder Haufwerk nach einem der vorangehenden Ansprüche, dadurch gekennzeichnet, daß die Faser bzw. das Filament im Bereich ihrer bzw. seiner Oberfläche reaktionsfähige Gruppen umfaßt.

5. Faser, Filament, Garn und/oder diese bzw. dieses aufweisendes Flächengebilde und/oder Haufwerk nach Anspruch 4, dadurch gekennzeichnet, daß der Bereich den Abschnitt der Faser- bzw. Filamentoberfläche darstellt, der die Mikrostrukturierung aufweist.

6. Faser, Filament, Garn und/oder diese bzw. dieses aufweisendes Flächengebilde und/oder Haufwerk nach einem der vorangehenden Ansprüche, dadurch gekennzeichnet, daß sich die Vertiefungen und/oder Erhebungen über etwa 20% bis etwa 80%, vorzugsweise über etwa 40% bis etwa 60%, der Oberfläche der Faser und/oder des Filamentes erstrecken.

7. Verfahren zur Herstellung von mikrostrukturierten Fasern, Filamenten, Garnen und/oder diese aufweisenden Flächengebilden und/oder Haufwerken nach einem der vorangehenden Ansprüche, bei dem man diese Substrate mit einem Laser bestrahlt, dadurch gekennzeichnet, daß man die Substrate mit einem gepulsten Gaslaser unter Ausbildung der überwiegend quer zur Längsachse der Fasern bzw. der Filamente verlaufenden linienförmigen Vertiefungen und/ oder Erhebungen bestrahlt.

8. Verfahren nach Anspruch 7, dadurch gekennzeichnet, daß man einen gepulsten Gaslaser verwendet, der eine Strahlung zwischen etwa 4 nm und etwa 1200 nm erzeugt.

9. Verfahren nach Anspruch 7 oder 8, dadurch gekennzeichnet, daß man die Strahlung durch einen Excimer-Laser erzeugt.

10. Verfahren nach Anspruch 9, dadurch gekennzeichnet, daß man einen KrF- oder ArF-Laser bei einer Wellenlänge der Laserstrahlen von 248 nm oder 193 nm verwendet.

11. Verfahren nach einem der Ansprüche 7 bis 10, dadurch gekennzeichnet, daß man einen Gaslaser verwendet, dessen Impulse eine Wiederholungsrate zwischen etwa 200 und etwa 250 Hz oder etwa zwischen 1 Hz und etwa 5 Hz haben.

12. Verfahren nach Anspruch 11, dadurch gekennzeichnet, daß man eine Impulsdauer zwischen etwa $10^{-15}$ Sekunden und etwa $10^{-3}$ Sekunden auswählt.

13. Verfahren nach einem der Ansprüche 7 bis 12, dadurch gekennzeichnet, daß man die Strahlenbehandlung in einer Schutzgasatmosphäre durchführt.

14. Verfahren nach einem der Ansprüche 7 bis 13, dadurch gekennzeichnet, daß man die Oberfläche der Fasern, des Filamentes und/oder des Garnes von allen Seiten bestrahlt.

15. Verfahren nach einem der Ansprüche 7 bis 13, dadurch gekennzeichnet, daß man bei Flächengebilden und Haufwerken die Strahlenbehandlung von der oberen und unteren Seite vornimmt.

16. Verfahren nach Anspruch 15, dadurch gekennzeichnet, daß man eine kontinuierliche in Längsrichtung bewegte Bahn des Flächengebildes bzw. Haufwerkes derart bestrahlt, daß man einen linienförmigen und gepulsten Laserstrahl quer zur Bewegungsrichtung der Bahn auf diese richtet.

17. Verfahren nach Anspruch 16, bei dem man auf das Flächengebilde eine Beschichtung aufbringt, dadurch gekennzeichnet, daß man die Strahlenbehandlung vor dem Aufbringen der Beschichtung durchführt.

18. Verfahren nach Anspruch 17, bei dem man das Flächengebilde mit pigmenthaltigen Farbstoffen färbt und/oder bedruckt, dadurch gekennzeichnet, daß man die Strahlenbehandlung vor dem Färben oder Drucken durchführt.

19. Verfahren nach Anspruch 16 zur Ausrüstung von für Filtrationszwecke verwendeten Haufwerken, dadurch gekennzeichnet, daß man während der Herstellung des Haufwerkes die Strahlenbehandlung durchführt.

20. Verfahren zur Herstellung von gemusterten Garnen oder textilen Flächengebilden nach einem der Ansprüche 7 bis 19, dadurch gekennzeichnet, daß man den von einem Laser erzeugten gepulsten Laserstrahl relativ zur Oberfläche des Garnes bzw. Flächengebildes nach einem vorgegebenen Muster bewegt.

21. Verfahren nach Anspruch 20, dadurch gekennzeichnet, daß man während der Bewegung des gepulsten Laserstrahles dessen Wellenlänge, Energie und/oder Leistung verändert.

22. Verfahren nach Anspruch 20 oder 21, dadurch gekennzeichnet, daß man als gepulsten Laserstrahl ein Bündel von gepulsten Laserstrahlen verwendete.

23. Verfahren nach Anspruch 22, dadurch gekennzeichnet, daß mindestens einzelne Laserstrahlen des Bündels eine unterschiedliche Wellenlänge aufweisen.

24. Verfahren nach einem der Ansprüche 20 bis 23, dadurch gekennzeichnet, daß man den Laserstrahl an einer Reflektionseinrichtung reflektiert und den reflektierten Laserstrahl auf die Oberfläche des Garnes bzw. Flächengebildes richtet und die Reflektionseinrichtung nach dem vorgegebenen Muster bewegt.

25. Verfahren zur Herstellung der bzw. des in einem Bereich der Oberfläche chemisch modifizierten Faser, Filamentes, Garnes, Flächengebildes und/oder Haufwerkes nach einem der Ansprüche 7 bis 24, dadurch gekennzeichnet, daß man in einer mindestens ein reaktionsfähiges Gas enthaltenden Gasatmosphäre bestrahlt.

26. Verfahren nach Anspruch 25, dadurch gekennzeichnet, daß man als reaktionsfähiges Gas ein saures oder basisches Gas verwendet.

27. Verfahren nach Anspruch 25 oder 26, dadurch gekennzeichnet, daß man als reaktionsfähiges Gas Sauerstoffverbindungen des Kohlenstoffs, Stickstoffs und/oder Schwefels verwendet.

28. Verfahren nach einem der Ansprüche 25 bis 27, dadurch gekennzeichnet, daß man als reaktionsfähiges Gas eine Interhalogenverbindung und/oder eine Halogenwasserstoffverbindung verwendet.

29. Verfahren nach einem der Ansprüche 25 bis 28, dadurch gekennzeichnet, daß man als reaktionsfähiges Gas eine organische Verbindung einsetzt, die mindestens eine Doppel- oder Dreifachbindung besitzt.

30. Verfahren nach einem der Ansprüche 25 bis 29, dadurch gekennzeichnet, daß man das reaktionsfähige Gas mit einem Inertgas vermischt.

31. Verfahren nach einem der Ansprüche 7 bis 30, dadurch gekennzeichnet, daß man eine thermoplastische Faser bestrahlt.

32. Vorrichtung zur Durchführung des Verfahrens nach einem der Ansprüche 7 bis 31 mit einem die Strahlung erzeugenden und auf die Oberfläche der Substrate gerichteten Laser, dadurch gekennzeichnet, daß die Vorrichtung eine endlose Bahn (9) von Fasern, Filamenten, Garnen, Flächengebilden und/oder Haufwerken mit einer bestimmten Geschwindigkeit transportierende Fördereinrichtung (4a, 4b) umfaßt, daß der Laser als gepulster Gaslaser (7) ausgebildet ist und daß ein weiterer gepulster Gaslaser (8) vorgesehen ist, wobei die beiden Gaslaser (7, 8) relativ zur Bahn (9) auf entgegengesetzten Seiten angeordnet sind.

33. Vorrichtung nach Anspruch 32, dadurch gekennzeichnet, daß in dem Strahlengang zwischen den Lasern (7, 8) und der endlosen Bahn (9) eine Aufweitungseinrichtung für die Strahlung angeordnet ist.

34. Vorrichtung nach Anspruch 32 oder 33 zur Ausrüstung von Fasern, Filamenten oder Garnen, dadurch gekennzeichnet, daß sie relativ zur Bahn (9) anstelle des zweiten Lasers (8) eine des Gaslasern (7, 8) gegenüberliegend angeordnete Reflektionseinrichtung für die Strahlung umfaßt.

35. Vorrichtung nach Anspruch 34, dadurch gekennzeichnet, daß die Reflektionseinrichtung ein dielektrischer Spiegel ist.

36. Verwendung der Faser, des Garnes, Filamentes, Flächengebildes und/oder Haufwerkes nach einem der Ansprüche 1 bis 6 zur Herstellung von faserverstärkten Kunststoffen.

37. Verwendung der Faser, des Garnes, Filamentes, Flächengebildes und/oder Haufwerkes nach einem der Ansprüche 1 bis 6 zur Herstellung von Laminaten.

38. Verwendung der Faser, des Garnes, Filamentes, Flächengebildes und/oder Haufwerkes nach einem der Ansprüche 1 bis 6 zur Herstellung von beschichteten Textilien.

39. Verwendung der Faser, des Garnes, Filamentes, Flächengebildes und/oder Haufwerkes nach einem der Ansprüche 1 bis 6 zur Herstellung von metallkaschierten Textilien, insbesondere vernickelten Fasern für Radarschutzbekleidung oder metallisierten Filamenten für Reinraumschutzbekleidung.

40. Verwendung der Faser, des Garnes, Filamentes, Flächengebildes und/oder Haufwerkes nach einem der Ansprüche 1 bis 6 zur Herstellung von faserverstärktem Beton.

41. Verwendung der Faser, des Garnes, Filamentes, Flächengebildes und/oder Haufwerkes nach einem der Ansprüche 1 bis 6 zur Herstellung von prothetischen Artikeln, insbesondere künstlichen Adern.

42. Verwendung der Faser, des Filamentes und/oder des Garnes nach einem der Ansprüche 1 bis 6 zur Herstellung von chirurgischem Nähmaterial.

43. Verwendung der Faser, des Filamentes, Garnes, Flächengebildes und/oder Haufwerkes nach einem der Ansprüche 1 bis 6 zur Herstellung von Filtern, insbesondere für Naß- sowie Trockenfiltrationsverfahren, osmotische Verfahren sowie Dialyseverfahren.

44. Verwendung der Faser, des Filamentes, Garnes, Flächengebildes und/oder Haufwerkes nach einem der Ansprüche 1 bis 6 zur Herstellung von Reifenkord.

45. Verwendung der Faser, des Filamentes, Garnes, Flächengebildes und/oder Haufwerkes nach einem der Ansprüche 1 bis 6 zur Herstellung von mikroporös beschichteten Textilien.

## Revendications

1. Fibre, filament, fil et/ou produit plat ou agrégat présentant ces éléments, ces substrats présentant à leur surface une microstructure produite par utilisation d'un laser, caractérisés en ce que la microstructure est conçue essentiellement sous forme d'évidements ou de surélévations linéaires s'étendant perpendiculairement à l'axe longitudinal de la fibre ou du filament, possédant une largeur pouvant atteindre environ 1 µm, une profondeur ou une hauteur pouvant atteindre environ 10 µm et un écartement variant entre environ 1 µm et environ 5 µm, et s'étendant sur environ 10 à 100% de la surface de la fibre et/ou du filament.

2. Fibre, filament, fil et/ou produit plat et/ou agrégat présentant ces éléments selon la revendication 1, caractérisés en ce que les évidements et/ou surélévations présentent respectivement une profondeur ou une hauteur entre environ 0,1 µm et 4 µm, de préférence 0,5 µm et 1 µm.

3. Fibre, filament, fil et/ou produit plat et/ou agrégat présentant ces éléments selon une des revendications susmentionnées, caractérisés en ce que les évidements et/ou surélévations linéaires possèdent une largeur jusqu'à environ 0,5 µm et un écartement entre environ 1 µm et 3 µm.

4. Fibre, filament, fil et/ou produit plat et/ou agrégat présentant ces éléments selon une des revendications susmentionnées, caractérisés en ce que la fibre ou le filament comporte des groupes réactifs dans la région de sa surface.

5. Fibre, filament, fil et/ou produit plat et/ou agrégat présentant ces éléments selon la revendication 4, caractérisés en ce que cette région représente la portion de la surface de la fibre ou du filament qui comporte la microstructure.

6. Fibre, filament, fil et/ou produit plat et/ou agrégat présentant ces éléments selon une des revendications susmentionnées, caractérisés en ce que les évidements et/ou surélévations s'étendent sur environ 20 à 80%, de préférence sur environ 40 à 60% de la surface de la fibre et/ou du filament.

7. Procédé de fabrication de fibres, filaments, fils et/ou produits plat et/ou agrégat présentant ces éléments microstructurés selon une des revendications susmentionnées, dans lequel ces substrats sont irradiés par un laser, caractérisé en ce qu'on irradie les substrats avec un laser à gaz en régime pulsé et formant des évidements et/ou surélévations linéaires s'étendant essentiellement perpendiculairement à l'axe longitudinal des fibres ou des filaments.

8. Procédé selon la revendication 7, caractérisé en ce qu'on a recours à un laser à gaz en régime pulsé qui produit une irradiation entre environ 5 nm et 1.200 nm.

9. Procédé selon une des revendications 7 ou 8, caractérisé en ce qu'on produit l'irradiation par un laser excimer.

10. Procédé selon la revendication 9, caractérisé en ce qu'on a recours à un laser KrF ou ArF avec une longueur d'onde des rayons laser de 248 nm ou 193 nm.

11. Procédé selon une des revendications 7 à 10, caractérisé en ce qu'on a recours à un laser à gaz dont les impulsions possèdent une vitesse de répétition située entre environ 200 et environ 250 Hz ou entre environ 1 Hz et environ 5 Hz.

12. Procédé selon la revendication 11, caractérisé en ce qu'on choisit une durée d'impulsion entre environ $10^{-15}$secondes et environ $10^{-5}$secondes.

13. Procédé selon une des revendications 7 à 12, caractérisé en ce qu'on procède à l'irradiation dans une atmosphère contrôlée.

14. Procédé selon une des revendications 7 à 13, caractérisé en ce qu'on irradie la surface des fibres, du filament et/ou du fil par tous les côtés.

15. Procédé selon une des revendications 7 à 13, caractérisé en ce que, sur des produits plats et des agrégats, on procède à l'irradiation par les faces inférieure et supérieure.

16. Procédé selon la revendication 15, caractérisé en ce qu'on irradie une bande continue de produit plat ou d'agrégat se déplaçant en direction longitudinale de façon à diriger un rayon laser linéaire et en régime pulsé sur la bande perpendiculairement par rapport au sens de déplacement de ladite bande.

17. Procédé selon la revendication 16, dans lequel on applique sur le produit plat une enduction, caractérisé en ce qu'on procède à l'irradiation avant l'application de l'enduit.

18. Procédé selon la revendication 17, dans lequel on teinte et/ou imprime le produit plat avec des colorants à pigments, caractérisé en ce qu'on procède à l'irradiation avant la teinture ou l'impression.

19. Procédé selon la revendication 16 pour équiper des agrégats utilisés pour la filtration, caractérisé en ce qu'on procède à l'irradiation pendant la fabrication de l'agrégat.

20. Procédé de fabrication de fils ou produits plats textiles à dessins selon une des revendications 7 à 19, caractérisé en ce qu'on déplace le rayon laser en régime pulsé produit par un laser selon un schéma donné par rapport à la surface du fil ou du produit plat.

21. Procédé selon la revendication 20, caractérisé en ce que, pendant le déplacement du rayon laser en régime pulsé, on modifie sa longueur d'onde, son énergie et/ou sa puissance.

22. Procédé selon une des revendications 20 ou 21, caractérisé en ce qu'on a utilisé comme rayon laser en régime pulsé un faisceau de rayons laser en régime pulsé.

23. Procédé selon la revendication 22, caractérisé en ce qu'au moins quelques rayons laser du faisceau présentent une longueur d'onde différente.

24. Procédé selon une des revendications 20 à 23, caractérisé en ce qu'on réfléchit le rayon laser sur un dispositif de réflexion, on dirige le rayon laser réfléchi sur la surface du fil ou du produit plat et on déplace le dispositif de réflexion selon le schéma donné.

25. Procédé de fabrication des fibre, filament, fil, produit plat et/ou agrégat modifiés chimiquement dans une région de leur surface selon une des revendications 7 à 24, caractérisé en ce qu'on procède à l'irradiation dans une atmosphère contenant au moins un gaz réactif.

26. Procédé selon la revendication 25, caractérisé en ce qu'on utilise comme gaz réactif un gaz acide ou basique.

27. Procédé selon la revendication 25 ou 26, caractérisé en ce qu'on utilise comme gaz réactif des composés oxygénés du carbone, de l'azote et/ou du soufre.

28. Procédé selon une des revendications 25 à 27, caractérisé en ce qu'on utilise comme gaz réactif un composé interhalogéné et/ou un composé de l'halogénure d'hydrogène.

29. Procédé selon une des revendications 25 à 28, caractérisé en ce qu'on utilise comme gaz réactif un composé organique qui possède au moins une liaison double ou une liaison triple.

30. Procédé selon une des revendications 25 à 29, caractérisé en ce qu'on mélange le gaz réactif à un gaz inerte.

31. Procédé selon une des revendications 7 à 30, caractérisé en ce qu'on irradie une fibre thermoplastique.

32. Dispositif de mise en oeuvre du procédé selon une des revendications 7 à 31 avec un laser produisant l'irradiation et dirigé sur la surface des substrats, caractérisé en ce que le dispositif comprend une bande continue (9) de fibres, filaments, fils, produits plats et/ou agrégats avec un convoyeur assurant le transport à une vitesse donnée (4a, 4b), que le laser est conçu en laser à gaz en régime pulsé (7) et qu'un autre laser à gaz en régime pulsé (8) est prévu, les deux lasers à gaz (7, 8) étant disposés de part et d'autre de la bande (9).

33. Dispositif selon la revendication 32, caractérisé en ce qu'un déflecteur pour l'irradiation est disposé dans le trajet du rayon entre les lasers (7, 8) et la bande continue (9).

34. Dispositif selon la revendication 32 ou 33 d'équipement de fibres, filaments ou fils, caractérisé en ce qu'il comprend, à la place du deuxième laser (8) un dispositif de réflexion disposé face aux lasers à gaz (7, 8) par rapport à la bande.

35. Dispositif selon la revendication 34, caractérisé en ce que le dispositif de réflexion est un miroir diélectrique.

36. Utilisation de la fibre, du fil, du filament, du produit plat et/ou de l'agrégat selon une des revendications 1 à 6 pour la fabrication de matériaux plastiques renforcés par fibres.

37. Mise en oeuvre de la fibre, du fil, du filament, du produit plat et/ou de l'agrégat selon une des revendications 1 à 6 pour la fabrication de stratifiés.

38. Mise en oeuvre de la fibre, du fil, du filament, du produit plat et/ou de l'agrégat selon une des revendications 1 à 6 pour la fabrication de textiles enduits.

39. Mise en oeuvre de la fibre, du fil, du filament, du produit plat et/ou de l'agrégat selon une des revendications 1 à 6 pour la fabrication de textiles revêtus de métal, en particulier de fibres nickelées pour les vêtements anti-radar ou les filaments métallisés pour les vêtements de protection destinés aux salles blanches.

40. Mise en oeuvre de la fibre, du fil, du filament, du produit plat et/ou de l'agrégat selon une des revendications 1 à 6 pour la fabrication de béton renforcé par fibres.

41. Mise en oeuvre de la fibre, du fil, du filament, du produit plat et/ou de l'agrégat selon une des revendications 1 à 6 pour la fabrication d'articles de prothèse, en particulier de vaisseaux artificiels.

42. Mise en oeuvre de la fibre, du filament et/ou du fil, selon une des revendications 1 à 6 pour la fabrication de matériau chirurgical de suture.

43. Mise en oeuvre de la fibre, du fil, du filament, du produit plat et/ou de l'agrégat selon une des revendications 1 à 6 pour la fabrication de filtres, en particulier pour les procédés de filtration à filtre humide ou à filtre sec, les procédés osmotiques ainsi que les procédés de dialyse.

44. Mise en oeuvre de la fibre, du fil, du filament, du produit plat et/ou de l'agrégat selon une des revendications 1 à 6 pour la fabrication de cordes de pneumatiques.

45. Mise en oeuvre de la fibre, du fil, du filament, du produit plat et/ou de l'agrégat selon une des revendications 1 à 6 pour la fabrication de textiles enduits microporeux.

## Claims

1. Fiber, filament, yarn and/or flat article and/or pile material containing these, wherein these substrates have on their surface a microstructure made by the use of a laser, characterized in that the microstructure has primarily the shape of linear depressions and/or elevations extending transversely with respect to the longitudinal axis of the fiber or of the filament, said linear depressions and/or elevations having a width up to about 1 $\mu$m and a depth or height up to about 10 $\mu$m and a spacing of between about 1 $\mu$m and about 5 $\mu$m and extending over about 10% up to about 100% of the surface of the fiber and/or of the filament.

2. Fiber, filament, yarn and/or flat article and/or pile material containing these according to claim 1, characterized in that the depressions or elevations have a depth or height of between about 0,1 $\mu$m and about 4 $\mu$m, preferably 0,5 $\mu$m and 1 $\mu$m.

3. Fiber, filament, yarn and/or flat article and/or pile material containing these according to one of the preceding claims, characterized in that the linear depressions and/or elevations have a width up to about 0,5 $\mu$m and a spacing of between about 1 $\mu$m and about 3 $\mu$m.

4. Fiber, filament, yarn and/or flat article and/or pile material containing these according to one of the preceding claims, characterized in that the fiber or the filament contains reactive groups in the area of its surface.

5. Fiber, filament, yarn and/or flat article and/or pile material containing these according to claim 4, characterized in that the area constitutes that section of the fiber or filament surface which has the microstructure.

6. Fiber, filament, yarn and/or flat article and/or pile material containing these according to one of the preceding claims, characterized in that the depressions and/or elevations extend over about 20% to about 80%, preferably over about 40% to about 60%, of the surface of the fiber and/or of the filament.

7. A process for the manufacture of microstructured fibers, filaments, yarns and/or flat articles and/or pile material containing these according to one of the preceding claims, according to which these substrates are irradiated with a laser, characterized in that the substrates are irradiated with a pulsed gas laser resulting in the formation of the linear depressions and/or elevations primarily extending transversely with respect to the longitudinal axis of the fibers or the filaments.

8. The process according to claim 7, characterized in that one uses a pulsed gas laser that generates a radiation of between about 5 nm and about 1200 nm.

9. The process according to claim 7 or 8, characterized in that the radiation is generated by an excimer laser.

10. The process according to claim 9, characterized in that one uses a KrF laser or ArF laser with a wave length of the laser radiation of 248 nm or 193 nm.

11. The process according to one of the claims 7 to 10, characterized in that one uses a gas laser the pulses of which having a repetition rate of between about 200 Hz and about 250 Hz or of between about 1 Hz and about 5 Hz

12. The process according to claim 11, characterized in that one selects a pulse duration of between about $10^{-15}$ sec and about $10^{-3}$ sec.

13. The process according to one of the claims 7 to 12, characterized in that the radiation treatment is carried out in a protection gas atmosphere.

14. The process according to one of the claims 7 to 13, characterized in that the surface of the fibers, the filaments and/or the yarn is irradiated from all sides

15. The process according to one of the claims 7 to 13, characterized by conducting the radiation treatment from the upper and lower side with flat articles and pile materials.

16. The process according to claim 15, characterized by irradiating a web of the flat article or the pile material which is continuously moved in longitudinal direction such that a linear and pulsed laser beam is directed at the web transversely to the direction of its movement.

17. The process according to claim 16 according to which a coating is applied to the flat article, characterized in that the radiation treatment is conducted before the coating is applied.

18. The process according to claim 17 according to which the flat article is dyed and/or printed with pigmented coloring substances, characterized in that the radiation treatment is conducted before the dyeing or printing.

19. The process according to claim 16 for finishing of pile material used for filtration purposes, characterized in that the radiation treatment is conducted during the manufacture of the pile material.

20. A process for the manufacture of patterned yarns or flat textile articles according to one of the claims 7 to 19, characterized in that the pulsed laser beam generated by a laser is moved according to a predetermined pattern relative to the surface of the yarn or flat article.

21. The process according to claim 20, characterized in that the wave length, energy and/or capacity of the pulsed laser beam is changed during the movement thereof.

22. The process according to claim 20 or 21, characterized in that a bundle of pulsed laser beams is used as pulsed laser beam.

23. The process according to claim 22, characterized in that at least certain laser beams of the bundle have a different wave length.

24. The process according to one of the claims 20 to 23, characterized in that the laser beam is reflected at a reflection means and the reflected laser beam is directed to the surface of the yarn or flat article and the reflection means is moved according to the predetermined pattern.

25. A process for the manufacture of the fiber, filament, yarn, flat article and/or pile material which is chemically modified in an area of its surface, according to one of the claims 7 to 24, characterized in that it is irradiated in a gas atmosphere containing at least one reactive gas.

26. The process according to claim 25, characterized by using an acid or basic gas as reactive gas.

27. The process according to claim 25 or 26, characterized by using oxygen compounds of carbon, nitrogen and/or sulfur as reactive gas

28. The process according to one of the claims 25 to 27, characterized by using an interhalogen compound and/or a halogen hydrogen compound as reactive gas.

29. The process according to one of the claims 25 to 28, characterized by using an organic compound having at least one double or triple bond as reactive gas.

30. The process according to one of the claims 25 to 29, characterized by mixing the reactive gas with an inert gas.

31. The process according to one of the claims 7 to 30, characterized by irradiating a thermoplastic fiber.

32. An apparatus for carrying out the process according to one of the claims 7 to 31 comprising a laser generating the radiation and directing the same to the surface of the substrate, characterized in that said apparatus contains a conveyor (4a, 4b) which transports an endless web (9) of fibers, filaments, yarns, flat articles and/or pile materials at a certain speed, in that the laser is a pulsed gas laser (7), and in that another pulsed gas laser (8) is provided, the two gas lasers (7, 8) being located on opposite sides relative to the web (9).

33. The apparatus according to claim 32, characterized in that an expansion device for the radiation is located in the path of beams between the lasers (7, 8) and the endless web (9).

34. The apparatus according to claim 32 or 33 for finishing fibers, filaments or yarns, characterized in that it comprises a reflection means for the radiation instead of the second laser (8) which is located opposite to the gas lasers (7, 8) relative to the web (9).

35. The apparatus according to claim 34, characterized in that the reflection means is a dielectric mirror.

36. Use of the fiber, yarn, filament, flat article and/or pile material according to one of the claims 1 to 6 for the manufacture of fiber-reenforced plastics.

37. The use of the fiber, yarn, filament, flat article and/or pile material according to one of the claims 1 to 6 for the manufacture of laminates.

38. The use of the fiber, yarn, filament, flat article and/or pile material according to one of the claims 1 to 6 for the manufacture of coated textiles.

39. The use of the fiber, yarn, filament, flat article and/or pile material according to one of the claims 1 to 6 for the manufacture of metal-clad textiles, especially nickel-coated fibers for radar protection clothing or metalized filaments for clean-room protective clothing.

40. The use of the fiber, yarn, filament, flat article and/or pile material according to one of the claims 1 to 6 for the manufacture of fiber-reenforced concrete.

41. The use of the fiber, yarn, filament, flat article and/or pile material according to one of the claims 1 to 6 for the manufacture of prosthetic articles, especially artificial veins.

42. The use of the fiber, the filament and/or the yarn according to one of the claims 1 to 6 for the manufacture of surgical sewing material.

43. The use of the fiber, the filament, yarn, flat article and/or pile material according to one of the claims 1 to 6 for the manufacture of filters, especially for wet and dry filtration processes, osmotic processes as well as dialysis processes.

44. The use of the fiber, the filament, yarn, flat article and/or pile material according to one of the claims 1 to 6 for the manufacture of tire cord.

45. The use of the fiber, the filament, yarn, flat article and/or pile material according to one of the claims 1 to 6 for the manufacture of microporously coated textiles

FIG. 1

FIG. 2

21

FIG. 3

$A\ [\mu\mu]$

$\lg E\ [^{m}\mathcal{I}/cm^{2}]$

FIG. 4